# EUROPEAN PATENT SPECIFICATION

(11) **EP 4 268 110 B1**
(45) Date of publication and mention of the grant of the patent: **12.08.2026**
(21) Application number: 21839123.3
(22) Date of filing: 14.12.2021
(51) Int. Cl.: G06F 21/64, G06Q 30/06, G06Q 40/02, G06Q 40/04, H04L 9/32, H04L 9/00

(54) **BLOCKCHAIN RELATED VERIFICATION METHOD AND SYSTEM**
VERFAHREN UND SYSTEM ZUR VERIFIZIERUNG IN BEZUG AUF BLOCKCHAIN
PROCÉDÉ ET SYSTÈME DE VÉRIFICATION ASSOCIÉS À UNE CHAÎNE DE BLOCS

(30) Priority: 24.12.2020 GB 202020599
(43) Date of publication of application: 01.11.2023
(73) Proprietor: nChain Licensing AG, 6300 Zug (CH)
(72) Inventor: WRIGHT, Craig Steven, London W1W 8AP (GB); PAN, Liuxuan, London W1W 8AP (GB); VAUGHAN, Owen, London W1W 8AP (GB)
(74) Representative: Page White Farrer
(86) International application number: PCT/EP2021/085663
(87) International publication number: WO 2022/136022

(56) References cited:
- GB-A- 2 581 970
- US-A1- 2020 379 856

## Description

### TECHNICAL FIELD

The present disclosure relates to a method of verifying records of transactions conducted via a blockchain.

### BACKGROUND

A blockchain refers to a form of distributed data structure, wherein a duplicate copy of the blockchain is maintained at each of a plurality of nodes in a distributed peer-to-peer (P2P) network (referred to below as a "blockchain network") and widely publicised. The blockchain comprises a chain of blocks of data, wherein each block comprises one or more transactions. Each transaction, other than so-called "coinbase transactions", points back to a preceding transaction in a sequence which may span one or more blocks going back to one or more coinbase transactions. Coinbase transactions are discussed further below. Transactions that are submitted to the blockchain network are included in new blocks. New blocks are created by a process often referred to as "mining", which involves each of a plurality of the nodes competing to perform "proof-of-work", i.e. solving a cryptographic puzzle based on a representation of a defined set of ordered and validated pending transactions waiting to be included in a new block of the blockchain. It should be noted that the blockchain may be pruned at some nodes, and the publication of blocks can be achieved through the publication of mere block headers.

The transactions in the blockchain may be used for one or more of the following purposes: to convey a digital asset (i.e. a number of digital tokens), to order a set of entries in a virtualised ledger or registry, to receive and process timestamp entries, and/or to time-order index pointers. A blockchain can also be exploited in order to layer additional functionality on top of the blockchain. For example blockchain protocols may allow for storage of additional user data or indexes to data in a transaction. There is no pre-specified limit to the maximum data capacity that can be stored within a single transaction, and therefore increasingly more complex data can be incorporated. For instance this may be used to store an electronic document in the blockchain, or audio or video data.

Nodes of the blockchain network (which are often referred to as "miners") perform a distributed transaction registration and verification process, which will be described in more detail later. In summary, during this process a node validates transactions and inserts them into a block template for which they attempt to identify a valid proof-of-work solution. Once a valid solution is found, a new block is propagated to other nodes of the network, thus enabling each node to record the new block on the blockchain. In order to have a transaction recorded in the blockchain, a user (e.g. a blockchain client application) sends the transaction to one of the nodes of the network to be propagated. Nodes which receive the transaction may race to find a proof-of-work solution incorporating the validated transaction into a new block. Each node is configured to enforce the same node protocol, which will include one or more conditions for a transaction to be valid. Invalid transactions will not be propagated nor incorporated into blocks. Assuming the transaction is validated and thereby accepted onto the blockchain, then the transaction (including any user data) will thus remain registered and indexed at each of the nodes in the blockchain network as an immutable public record.

The node who successfully solved the proof-of-work puzzle to create the latest block is typically rewarded with a new transaction called the "coinbase transaction" which distributes an amount of the digital asset, i.e. a number of tokens. The detection and rejection of invalid transactions is enforced by the actions of competing nodes who act as agents of the network and are incentivised to report and block malfeasance. The widespread publication of information allows users to continuously audit the performance of nodes. The publication of the mere block headers allows participants to ensure the ongoing integrity of the blockchain.

In an "output-based" model (sometimes referred to as a UTXO-based model), the data structure of a given transaction comprises one or more inputs and one or more outputs. Any spendable output comprises an element specifying an amount of the digital asset that is derivable from the proceeding sequence of transactions. The spendable output is sometimes referred to as a UTXO ("unspent transaction output"). The output may further comprise a locking script specifying a condition for the future redemption of the output. A locking script is a predicate defining the conditions necessary to validate and transfer digital tokens or assets. Each input of a transaction (other than a coinbase transaction) comprises a pointer (i.e. a reference) to such an output in a preceding transaction, and may further comprise an unlocking script for unlocking the locking script of the pointed-to output. So consider a pair of transactions, call them a first and a second transaction (or "target" transaction). The first transaction comprises at least one output specifying an amount of the digital asset, and comprising a locking script defining one or more conditions of unlocking the output. The second, target transaction comprises at least one input, comprising a pointer to the output of the first transaction, and an unlocking script for unlocking the output of the first transaction.

In such a model, when the second, target transaction is sent to the blockchain network to be propagated and recorded in the blockchain, one of the criteria for validity applied at each node will be that the unlocking script meets all of the one or more conditions defined in the locking script of the first transaction. Another will be that the output of the first transaction has not already been redeemed by another, earlier valid transaction. Any node that finds the target transaction invalid according to any of these conditions will not propagate it (as a valid transaction, but possibly to register an invalid transaction) nor include it in a new block to be recorded in the blockchain.

An alternative type of transaction model is an account-based model. In this case each transaction does not define the amount to be transferred by referring back to the UTXO of a preceding transaction in a sequence of past transactions, but rather by reference to an absolute account balance. The current state of all accounts is stored by the nodes separate to the blockchain and is updated constantly.

GB 2,581,970 discloses a method whereby a blockchain is used to evidence that a first party agrees to a statement or document, such as a deed, will or other legal document. A second party or witness receives confirmation that the first party or signatory agrees to the document, e.g. orally by video or mobile phone call. The witness receives information from the signatory, but this information is withheld until after the signatory has generated a cryptographic signature and provided their confirmation of agreement. Once the information is available to the witness, the witness attests to receipt of the signatory's confirmation by generating a cryptographic signature based on the previously withheld information. Each of the parties' cryptographic signatures is included in at least one blockchain transaction, and each transaction is propagated to the blockchain network nodes upon meeting a validation condition. The validation condition requires that each party's cryptographic signature is included in at least one transaction and that the witness' signature was generated by signing the withheld information. The transaction locking and unlocking scripts guarantee that the witness cannot provide their signature and attest to the signatory's agreement until after the signatory has provided both their cryptographic signature and confirmed their agreement with the document.

US 2020/379856 discloses a method comprising: receiving, from a blockchain peer node, a sequence of blocks stored in a hash-linked chain of blocks on a distributed ledger, where each block in the sequence of blocks includes a reduced-step hash of block content from a previous block in the sequence; performing an approximate hash verification on the reduced-step hashes stored among the sequence of blocks; and determining whether the sequence of blocks has been tampered with based on the approximate hash verification on the reduced-step hashes

### SUMMARY

It is identified herein that there are a number of scenarios where it would be useful to determine whether a first party ("Alice") and a second party ("Bob") agree on the membership of a set of blockchain transactions conducted between Alice and Bob (i.e. agree on which blockchain transactions are part of the set). It would be particularly desirable to be able to do this in a way that enables evidence to be reproduced later if one of the parties misrepresented the set. For example, this could be useful to any body such as a tax authority or private auditor auditing the transactions of the two parties.

However there are technical considerations involved in implementing this. A naïve solution would simply be to have Alice and Bob each send an off-chain report of the transactions in which they were involved to a third party (e.g. tax authority, auditor, etc.) and have the third party store all the reports. However this would be burdensome on the centralized storage space of the third party. Further, future evidence would also be reliant on the storage of the third party, which assumes that the third party's records alone can be trusted as a definitive, immutable store, which may not necessarily be the case (e.g. they could be vulnerable to tampering, malware or data loss). Alternatively, another naïve solution would be simply to allow the third party to observe Alice and Bob's transactions on chain unilaterally, without Alice or Bob needing to report to the third party at all. After all, the nature of the blockchain is that, once included in blocks, transactions are recorded permanently on chain as an immutable public record. However there is another technical downside to relying on this approach alone, in that Alice and Bob's transactions will be scattered across the blockchain and it would be onerous in terms of compute resource of the third party to unilaterally search for them all. Also, typically parties anonymise their transactions by using different keys for different transactions.

The present disclosure provides a more efficient, hybrid implementation whereby Alice and Bob are required to report their transactions to a third party, but each of them also has to make an attestation of their reported transactions each in an additional transaction recorded on chain (these additional transactions being referred to herein as the "first" and "second" transactions, which are separate from the transactions being reported on, i.e. the transactions between Alice and Bob). For example the attestation could be a hash root of a hash tree (sometimes also called a Merkle root of a Merkel tree), of which the transaction IDs or such like are the leaves.

According to one aspect disclosed herein, there is provided a computer implemented method of determining whether a first party and a second party agree on membership of a set of blockchain transactions transacting between the first and second party. The method comprises, by a third party: from the first party, receiving a first report comprising an indication of each of a plurality of blockchain transactions involving the first party including at least the blockchain transactions in said set, the first report comprising one or more reporting messages sent at one or more times; and from the second party, receiving a second report comprising an indication of each of a plurality of blockchain transactions involving the second party including at least some or all of the blockchain transactions in said set, the second report comprising one or more reporting messages sent at one or more times. The method further comprises, by the third party: observing on a blockchain a first attestation recorded by the first party in at least one first blockchain transaction, the first attestation comprising a first attestation value derived from the first party having applied a first transform to the indications reported in the first report; and observing on a blockchain a second attestation recorded by the second party in a second blockchain transaction, the second attestation comprising a second attestation value derived from the second party having applied a second transform to the indications as reported in the second report, and the first and second blockchain transactions being separate form said set. The third party checks that the first report is consistent with the first attestation by applying the first transform to the indications reported in the first report and comparing with the first attestation from the blockchain; and checks that the second report is consistent with the second attestation, by applying the second transform to the indications reported in the second report and comparing with the second attestation from the blockchain. The third party also determines whether the indications in the first report indicate the same membership of the set as the indications in the second report.

The reports inform the third party of the reported transactions, but the attestation remains on chain as an immutable public record. The third party checks whether the reports are consistent with the corresponding attestations and also whether the reports match one another. If the determination reveals that one of the parties has misrepresented the set relative to the other then the attestation can be used as immutable evidence that one of the parties, e.g. Bob, made a false declaration.

The third party may store the attestations or a pointer to the attestations for later use as evidence. The third party may store the indication (e.g. transaction ID) of a suspect transaction, i.e. one that was not reported in both reports. The third party may also store a link to the identity of the third party, and in embodiments where the attestation comprises a root of a hash tree (Merkle tree), the third party may also store a hash tree path (Merkle path) between the root and the indication of the transaction (e.g. transaction ID) in question. But the third party need not necessarily store the full first and second reports nor all the indications (e.g. transaction IDs) from the first and second reports. Instead the first and second parties may store their own records of the indications of the transactions in the set. These records of the first and second parties may be used later in conjunction with the on-chain attestation to evidence the transactions which they attested to. If Alice or Bob destroyed their records, then this in itself may be evidence of wrongdoing, as they will not be able to reproduce the attestation. In other words, since there is an on-chain attestation, then if later Alice and Bob can't produce a set of TxIDs that satisfy the attestation, this means they must have destroyed (or perhaps lost) some records, but they can't just pretend they never reported or attested to the these transactions. All the third party may need to store is evidence of wrongdoing. Only information on a single transaction is needed for this.

E.g. consider this scenario: a tax authority (TA) gathers together all transaction IDs over a month to identify wrongdoing (only the TA can do this as they will have both Alice and Bob's records). Once the TA identifies a suspect transaction, the TA stores the transaction, the Merkle path, the attestation, and the link to Bob's identity in the transaction. The TA is then free to delete the rest of Alice's transactions. The TA is left with just one transaction. This provides evidence of wrongdoing because Bob will not be able to prove the inclusion of this transaction in his attested Merkle tree.

At the same time since the attestation recorded on the public is a transform of the set (preferably an irreversible transform) rather than the explicit indications (e.g. raw TxIDs), this obfuscates the identity of the set and so helps preserves privacy of the parties unless it is needed to prove that one of them made an incorrect report. Otherwise without this measure, there would be a public record of all the transactions involving Alice, all those involving Bob, etc.

In embodiments, Alice's report may include both transactions that involve Bob and transactions that include one or more further parties (Charlie, etc.), in which case her attestation will attest to all these transactions together. E.g. perhaps she publishes one monthly attestation of all her transactions with all parties. In such a case, it would be desirable if, when evidence of Bob's misrepresentation needs to be provided to a fourth party such as a court or the police, this can be provided without compromising Charlie's privacy by revealing the identity of his transactions with Alice (e.g. without giving away his transaction IDs).

Hence in embodiments, the indications in the first report and/or second report may further include an indication of each of one or more further blockchain transactions transacting with one or more further parties other than the first, second and third parties, said set being an intersection of transactions involving the first or second parties. The first attestation value may comprise a root of a hash tree, each of the indications reported in the first report being a leaf of the hash tree; and the method may comprise: in response to determining that the first and second reports indicate different membership of the set, identifying at least one blockchain transaction present indicated in the first report but not the second report; using the hash tree root, and a hash tree path between the root and the indication representing the missing transaction, in order to produce evidence that the second party made a false attestation; and based on the use of the hash tree root and path, presenting the evidence to a fourth party without disclosing to the fourth party the indications of the transactions of said further parties.

Given a hash tree root and path, a hash tree enables it to be demonstrated that a given candidate leaf (in this case one of the indications, e.g. transaction IDs, of the transaction in question between Alice and Bob) is indeed a leaf of the hash tree with that hash root, without needing to reveal the other leaves (in this case the indications, e.g. Tx IDs, of Charlie's transactions with Alice, etc). Thus the evidence of Bob's misrepresentation can be presented to a fourth party such as a court, the police, etc., without compromising Charlie's privacy.

### BRIEF DESCRIPTION OF THE DRAWINGS

To assist understanding of embodiments of the present disclosure and to show how such embodiments may be put into effect, reference is made, by way of example only, to the accompanying drawings in which:
Figure 1 is a schematic block diagram of a system for implementing a blockchain,
Figure 2 schematically illustrates some examples of transactions which may be recorded in a blockchain,
Figure 3 is a schematic block diagram of a system for determining whether a first party and a second party agree on membership of a set of blockchain transactions according to embodiments disclosed herein,
Figure 4 is a signalling chart showing a method according to embodiments disclosed herein,
Figure 5 is a flow chart showing a method according to embodiments disclosed herein, and
Figure 6 schematically illustrates an example of a hash tree (Merkle tree).

### DETAILED DESCRIPTION OF EMBODIMENTS

### EXAMPLE SYSTEM OVERVIEW

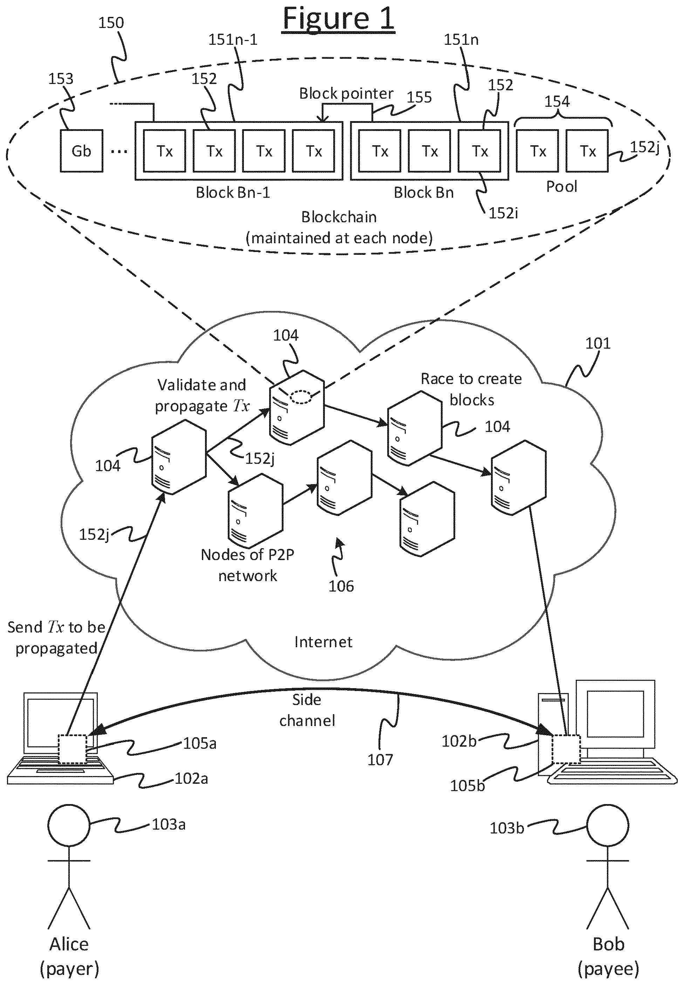

Figure 1 shows an example system 100 for implementing a blockchain 150. The system 100 may comprise a packet-switched network 101, typically a wide-area internetwork such as the Internet. The packet-switched network 101 comprises a plurality of blockchain nodes 104 that may be arranged to form a peer-to-peer (P2P) network 106 within the packet-switched network 101. Whilst not illustrated, the blockchain nodes 104 may be arranged as a near-complete graph. Each blockchain node 104 is therefore highly connected to other blockchain nodes 104.

Each blockchain node 104 comprises computer equipment of a peer, with different ones of the nodes 104 belonging to different peers. Each blockchain node 104 comprises processing apparatus comprising one or more processors, e.g. one or more central processing units (CPUs), accelerator processors, application specific processors and/or field programmable gate arrays (FPGAs), and other equipment such as application specific integrated circuits (ASICs). Each node also comprises memory, i.e. computer-readable storage in the form of a non-transitory computer-readable medium or media. The memory may comprise one or more memory units employing one or more memory media, e.g. a magnetic medium such as a hard disk; an electronic medium such as a solid-state drive (SSD), flash memory or EEPROM; and/or an optical medium such as an optical disk drive.

The blockchain 150 comprises a chain of blocks of data 151, wherein a respective copy of the blockchain 150 is maintained at each of a plurality of blockchain nodes 104 in the distributed or blockchain network 106. As mentioned above, maintaining a copy of the blockchain 150 does not necessarily mean storing the blockchain 150 in full. Instead, the blockchain 150 may be pruned of data so long as each blockchain node 150 stores the block header (discussed below) of each block 151. Each block 151 in the chain comprises one or more transactions 152, wherein a transaction in this context refers to a kind of data structure. The nature of the data structure will depend on the type of transaction protocol used as part of a transaction model or scheme. A given blockchain will use one particular transaction protocol throughout. In one common type of transaction protocol, the data structure of each transaction 152 comprises at least one input and at least one output. Each output specifies an amount representing a quantity of a digital asset as property, an example of which is a user 103 to whom the output is cryptographically locked (requiring a signature or other solution of that user in order to be unlocked and thereby redeemed or spent). Each input points back to the output of a preceding transaction 152, thereby linking the transactions.

Each block 151 also comprises a block pointer 155 pointing back to the previously created block 151 in the chain so as to define a sequential order to the blocks 151. Each transaction 152 (other than a coinbase transaction) comprises a pointer back to a previous transaction so as to define an order to sequences of transactions (N.B. sequences of transactions 152 are allowed to branch). The chain of blocks 151 goes all the way back to a genesis block (Gb) 153 which was the first block in the chain. One or more original transactions 152 early on in the chain 150 pointed to the genesis block 153 rather than a preceding transaction.

Each of the blockchain nodes 104 is configured to forward transactions 152 to other blockchain nodes 104, and thereby cause transactions 152 to be propagated throughout the network 106. Each blockchain node 104 is configured to create blocks 151 and to store a respective copy of the same blockchain 150 in their respective memory. Each blockchain node 104 also maintains an ordered set (or "pool") 154 of transactions 152 waiting to be incorporated into blocks 151. The ordered pool 154 is often referred to as a "mempool". This term herein is not intended to limit to any particular blockchain, protocol or model. It refers to the ordered set of transactions which a node 104 has accepted as valid and for which the node 104 is obliged not to accept any other transactions attempting to spend the same output.

In a given present transaction 152j, the (or each) input comprises a pointer referencing the output of a preceding transaction 152i in the sequence of transactions, specifying that this output is to be redeemed or "spent" in the present transaction 152j. In general, the preceding transaction could be any transaction in the ordered set 154 or any block 151. The preceding transaction 152i need not necessarily exist at the time the present transaction 152j is created or even sent to the network 106, though the preceding transaction 152i will need to exist and be validated in order for the present transaction to be valid. Hence "preceding" herein refers to a predecessor in a logical sequence linked by pointers, not necessarily the time of creation or sending in a temporal sequence, and hence it does not necessarily exclude that the transactions 152i, 152j be created or sent out-of-order (see discussion below on orphan transactions). The preceding transaction 152i could equally be called the antecedent or predecessor transaction.

The input of the present transaction 152j also comprises the input authorisation, for example the signature of the user 103a to whom the output of the preceding transaction 152i is locked. In turn, the output of the present transaction 152j can be cryptographically locked to a new user or entity 103b. The present transaction 152j can thus transfer the amount defined in the input of the preceding transaction 152i to the new user or entity 103b as defined in the output of the present transaction 152j. In some cases a transaction 152 may have multiple outputs to split the input amount between multiple users or entities (one of whom could be the original user or entity 103a in order to give change). In some cases a transaction can also have multiple inputs to gather together the amounts from multiple outputs of one or more preceding transactions, and redistribute to one or more outputs of the current transaction.

According to an output-based transaction protocol such as bitcoin, when a party 103, such as an individual user or an organization, wishes to enact a new transaction 152j (either manually or by an automated process employed by the party), then the enacting party sends the new transaction from its computer terminal 102 to a recipient. The enacting party or the recipient will eventually send this transaction to one or more of the blockchain nodes 104 of the network 106 (which nowadays are typically servers or data centres, but could in principle be other user terminals). It is also not excluded that the party 103 enacting the new transaction 152j could send the transaction directly to one or more of the blockchain nodes 104 and, in some examples, not to the recipient. A blockchain node 104 that receives a transaction checks whether the transaction is valid according to a blockchain node protocol which is applied at each of the blockchain nodes 104. The blockchain node protocol typically requires the blockchain node 104 to check that a cryptographic signature in the new transaction 152j matches the expected signature, which depends on the previous transaction 152i in an ordered sequence of transactions 152. In such an output-based transaction protocol, this may comprise checking that the cryptographic signature or other authorisation of the party 103 included in the input of the new transaction 152j matches a condition defined in the output of the preceding transaction 152i which the new transaction assigns, wherein this condition typically comprises at least checking that the cryptographic signature or other authorisation in the input of the new transaction 152j unlocks the output of the previous transaction 152i to which the input of the new transaction is linked to. The condition may be at least partially defined by a script included in the output of the preceding transaction 152i. Alternatively it could simply be fixed by the blockchain node protocol alone, or it could be due to a combination of these. Either way, if the new transaction 152j is valid, the blockchain node 104 forwards it to one or more other blockchain nodes 104 in the blockchain network 106. These other blockchain nodes 104 apply the same test according to the same blockchain node protocol, and so forward the new transaction 152j on to one or more further nodes 104, and so forth. In this way the new transaction is propagated throughout the network of blockchain nodes 104.

In an output-based model, the definition of whether a given output (e.g. UTXO) is assigned (e.g. spent) is whether it has yet been validly redeemed by the input of another, onward transaction 152j according to the blockchain node protocol. Another condition for a transaction to be valid is that the output of the preceding transaction 152i which it attempts to redeem has not already been redeemed by another transaction. Again if not valid, the transaction 152j will not be propagated (unless flagged as invalid and propagated for alerting) or recorded in the blockchain 150. This guards against double-spending whereby the transactor tries to assign the output of the same transaction more than once. An account-based model on the other hand guards against double-spending by maintaining an account balance. Because again there is a defined order of transactions, the account balance has a single defined state at any one time.

In addition to validating transactions, blockchain nodes 104 also race to be the first to create blocks of transactions in a process commonly referred to as mining, which is supported by "proof-of-work". At a blockchain node 104, new transactions are added to an ordered pool 154 of valid transactions that have not yet appeared in a block 151 recorded on the blockchain 150. The blockchain nodes then race to assemble a new valid block 151 of transactions 152 from the ordered set of transactions 154 by attempting to solve a cryptographic puzzle. Typically this comprises searching for a "nonce" value such that when the nonce is concatenated with a representation of the ordered pool of pending transactions 154 and hashed, then the output of the hash meets a predetermined condition. E.g. the predetermined condition may be that the output of the hash has a certain predefined number of leading zeros. Note that this is just one particular type of proof-of-work puzzle, and other types are not excluded. A property of a hash function is that it has an unpredictable output with respect to its input. Therefore this search can only be performed by brute force, thus consuming a substantive amount of processing resource at each blockchain node 104 that is trying to solve the puzzle.

The first blockchain node 104 to solve the puzzle announces this to the network 106, providing the solution as proof which can then be easily checked by the other blockchain nodes 104 in the network (once given the solution to a hash it is straightforward to check that it causes the output of the hash to meet the condition). The first blockchain node 104 propagates a block to a threshold consensus of other nodes that accept the block and thus enforce the protocol rules. The ordered set of transactions 154 then becomes recorded as a new block 151 in the blockchain 150 by each of the blockchain nodes 104. A block pointer 155 is also assigned to the new block 151n pointing back to the previously created block 151n-1 in the chain. The significant amount of effort, for example in the form of hash, required to create a proof-of-work solution signals the intent of the first node 104 to follow the rules of the blockchain protocol. Such rules include not accepting a transaction as valid if it assigns the same output as a previously validated transaction, otherwise known as double-spending. Once created, the block 151 cannot be modified since it is recognized and maintained at each of the blockchain nodes 104 in the blockchain network 106. The block pointer 155 also imposes a sequential order to the blocks 151. Since the transactions 152 are recorded in the ordered blocks at each blockchain node 104 in a network 106, this therefore provides an immutable public ledger of the transactions.

Note that different blockchain nodes 104 racing to solve the puzzle at any given time may be doing so based on different snapshots of the pool of yet-to-be published transactions 154 at any given time, depending on when they started searching for a solution or the order in which the transactions were received. Whoever solves their respective puzzle first defines which transactions 152 are included in the next new block 151n and in which order, and the current pool 154 of unpublished transactions is updated. The blockchain nodes 104 then continue to race to create a block from the newly-defined ordered pool of unpublished transactions 154, and so forth. A protocol also exists for resolving any "fork" that may arise, which is where two blockchain nodes104 solve their puzzle within a very short time of one another such that a conflicting view of the blockchain gets propagated between nodes 104. In short, whichever prong of the fork grows the longest becomes the definitive blockchain 150. Note this should not affect the users or agents of the network as the same transactions will appear in both forks.

According to the bitcoin blockchain (and most other blockchains) a node that successfully constructs a new block 104 is granted the ability to newly assign an additional, accepted amount of the digital asset in a new special kind of transaction which distributes an additional defined quantity of the digital asset (as opposed to an inter-agent, or inter-user transaction which transfers an amount of the digital asset from one agent or user to another). This special type of transaction is usually referred to as a "coinbase transaction", but may also be termed an "initiation transaction" or "generation transaction". It typically forms the first transaction of the new block 151n. The proof-of-work signals the intent of the node that constructs the new block to follow the protocol rules allowing this special transaction to be redeemed later. The blockchain protocol rules may require a maturity period, for example 100 blocks, before this special transaction may be redeemed. Often a regular (non-generation) transaction 152 will also specify an additional transaction fee in one of its outputs, to further reward the blockchain node 104 that created the block 151n in which that transaction was published. This fee is normally referred to as the "transaction fee", and is discussed blow.

Due to the resources involved in transaction validation and publication, typically at least each of the blockchain nodes 104 takes the form of a server comprising one or more physical server units, or even whole a data centre. However in principle any given blockchain node 104 could take the form of a user terminal or a group of user terminals networked together.

The memory of each blockchain node 104 stores software configured to run on the processing apparatus of the blockchain node 104 in order to perform its respective role or roles and handle transactions 152 in accordance with the blockchain node protocol. It will be understood that any action attributed herein to a blockchain node 104 may be performed by the software run on the processing apparatus of the respective computer equipment. The node software may be implemented in one or more applications at the application layer, or a lower layer such as the operating system layer or a protocol layer, or any combination of these.

Also connected to the network 101 is the computer equipment 102 of each of a plurality of parties 103 in the role of consuming users. These users may interact with the blockchain network 106 but do not participate in validating transactions or constructing blocks. Some of these users or agents 103 may act as senders and recipients in transactions. Other users may interact with the blockchain 150 without necessarily acting as senders or recipients. For instance, some parties may act as storage entities that store a copy of the blockchain 150 (e.g. having obtained a copy of the blockchain from a blockchain node 104).

Some or all of the parties 103 may be connected as part of a different network, e.g. a network overlaid on top of the blockchain network 106. Users of the blockchain network (often referred to as "clients") may be said to be part of a system that includes the blockchain network 106; however, these users are not blockchain nodes 104 as they do not perform the roles required of the blockchain nodes. Instead, each party 103 may interact with the blockchain network 106 and thereby utilize the blockchain 150 by connecting to (i.e. communicating with) a blockchain node 106. Two parties 103 and their respective equipment 102 are shown for illustrative purposes: a first party 103a and his/her respective computer equipment 102a, and a second party 103b and his/her respective computer equipment 102b. It will be understood that many more such parties 103 and their respective computer equipment 102 may be present and participating in the system 100, but for convenience they are not illustrated. Each party 103 may be an individual or an organization. Purely by way of illustration the first party 103a is referred to herein as Alice and the second party 103b is referred to as Bob, but it will be appreciated that this is not limiting and any reference herein to Alice or Bob may be replaced with "first party" and "second "party" respectively.

The computer equipment 102 of each party 103 comprises respective processing apparatus comprising one or more processors, e.g. one or more CPUs, GPUs, other accelerator processors, application specific processors, and/or FPGAs. The computer equipment 102 of each party 103 further comprises memory, i.e. computer-readable storage in the form of a non-transitory computer-readable medium or media. This memory may comprise one or more memory units employing one or more memory media, e.g. a magnetic medium such as hard disk; an electronic medium such as an SSD, flash memory or EEPROM; and/or an optical medium such as an optical disc drive. The memory on the computer equipment 102 of each party 103 stores software comprising a respective instance of at least one client application 105 arranged to run on the processing apparatus. It will be understood that any action attributed herein to a given party 103 may be performed using the software run on the processing apparatus of the respective computer equipment 102. The computer equipment 102 of each party 103 comprises at least one user terminal, e.g. a desktop or laptop computer, a tablet, a smartphone, or a wearable device such as a smartwatch. The computer equipment 102 of a given party 103 may also comprise one or more other networked resources, such as cloud computing resources accessed via the user terminal.

The client application 105 may be initially provided to the computer equipment 102 of any given party 103 on suitable computer-readable storage medium or media, e.g. downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The client application 105 comprises at least a "wallet" function. This has two main functionalities. One of these is to enable the respective party 103 to create, authorise (for example sign) and send transactions 152 to one or more bitcoin nodes 104 to then be propagated throughout the network of blockchain nodes 104 and thereby included in the blockchain 150. The other is to report back to the respective party the amount of the digital asset that he or she currently owns. In an output-based system, this second functionality comprises collating the amounts defined in the outputs of the various 152 transactions scattered throughout the blockchain 150 that belong to the party in question.

Note: whilst the various client functionality may be described as being integrated into a given client application 105, this is not necessarily limiting and instead any client functionality described herein may instead be implemented in a suite of two or more distinct applications, e.g. interfacing via an API, or one being a plug-in to the other. More generally the client functionality could be implemented at the application layer or a lower layer such as the operating system, or any combination of these. The following will be described in terms of a client application 105 but it will be appreciated that this is not limiting.

The instance of the client application or software 105 on each computer equipment 102 is operatively coupled to at least one of the blockchain nodes 104 of the network 106. This enables the wallet function of the client 105 to send transactions 152 to the network 106. The client 105 is also able to contact blockchain nodes 104 in order to query the blockchain 150 for any transactions of which the respective party 103 is the recipient (or indeed inspect other parties' transactions in the blockchain 150, since in embodiments the blockchain 150 is a public facility which provides trust in transactions in part through its public visibility). The wallet function on each computer equipment 102 is configured to formulate and send transactions 152 according to a transaction protocol. As set out above, each blockchain node 104 runs software configured to validate transactions 152 according to the blockchain node protocol, and to forward transactions 152 in order to propagate them throughout the blockchain network 106. The transaction protocol and the node protocol correspond to one another, and a given transaction protocol goes with a given node protocol, together implementing a given transaction model. The same transaction protocol is used for all transactions 152 in the blockchain 150. The same node protocol is used by all the nodes 104 in the network 106.

When a given party 103, say Alice, wishes to send a new transaction 152j to be included in the blockchain 150, then she formulates the new transaction in accordance with the relevant transaction protocol (using the wallet function in her client application 105). She then sends the transaction 152 from the client application 105 to one or more blockchain nodes 104 to which she is connected. E.g. this could be the blockchain node 104 that is best connected to Alice's computer 102. When any given blockchain node 104 receives a new transaction 152j, it handles it in accordance with the blockchain node protocol and its respective role. This comprises first checking whether the newly received transaction 152j meets a certain condition for being "valid", examples of which will be discussed in more detail shortly. In some transaction protocols, the condition for validation may be configurable on a per-transaction basis by scripts included in the transactions 152. Alternatively the condition could simply be a built-in feature of the node protocol, or be defined by a combination of the script and the node protocol.

On condition that the newly received transaction 152j passes the test for being deemed valid (i.e. on condition that it is "validated"), any blockchain node 104 that receives the transaction 152j will add the new validated transaction 152 to the ordered set of transactions 154 maintained at that blockchain node 104. Further, any blockchain node 104 that receives the transaction 152j will propagate the validated transaction 152 onward to one or more other blockchain nodes 104 in the network 106. Since each blockchain node 104 applies the same protocol, then assuming the transaction 152j is valid, this means it will soon be propagated throughout the whole network 106.

Once admitted to the ordered pool of pending transactions 154 maintained at a given blockchain node 104, that blockchain node 104 will start competing to solve the proof-of-work puzzle on the latest version of their respective pool of 154 including the new transaction 152 (recall that other blockchain nodes 104 may be trying to solve the puzzle based on a different pool of transactions154, but whoever gets there first will define the set of transactions that are included in the latest block 151. Eventually a blockchain node 104 will solve the puzzle for a part of the ordered pool 154 which includes Alice's transaction 152j). Once the proof-of-work has been done for the pool 154 including the new transaction 152j, it immutably becomes part of one of the blocks 151 in the blockchain 150. Each transaction 152 comprises a pointer back to an earlier transaction, so the order of the transactions is also immutably recorded.

Different blockchain nodes 104 may receive different instances of a given transaction first and therefore have conflicting views of which instance is 'valid' before one instance is published in a new block 151, at which point all blockchain nodes 104 agree that the published instance is the only valid instance. If a blockchain node 104 accepts one instance as valid, and then discovers that a second instance has been recorded in the blockchain 150 then that blockchain node 104 must accept this and will discard (i.e. treat as invalid) the instance which it had initially accepted (i.e. the one that has not been published in a block 151).

An alternative type of transaction protocol operated by some blockchain networks may be referred to as an "account-based" protocol, as part of an account-based transaction model. In the account-based case, each transaction does not define the amount to be transferred by referring back to the UTXO of a preceding transaction in a sequence of past transactions, but rather by reference to an absolute account balance. The current state of all accounts is stored, by the nodes of that network, separate to the blockchain and is updated constantly. In such a system, transactions are ordered using a running transaction tally of the account (also called the "position"). This value is signed by the sender as part of their cryptographic signature and is hashed as part of the transaction reference calculation. In addition, an optional data field may also be signed the transaction. This data field may point back to a previous transaction, for example if the previous transaction ID is included in the data field.

### UTXO-BASED MODEL

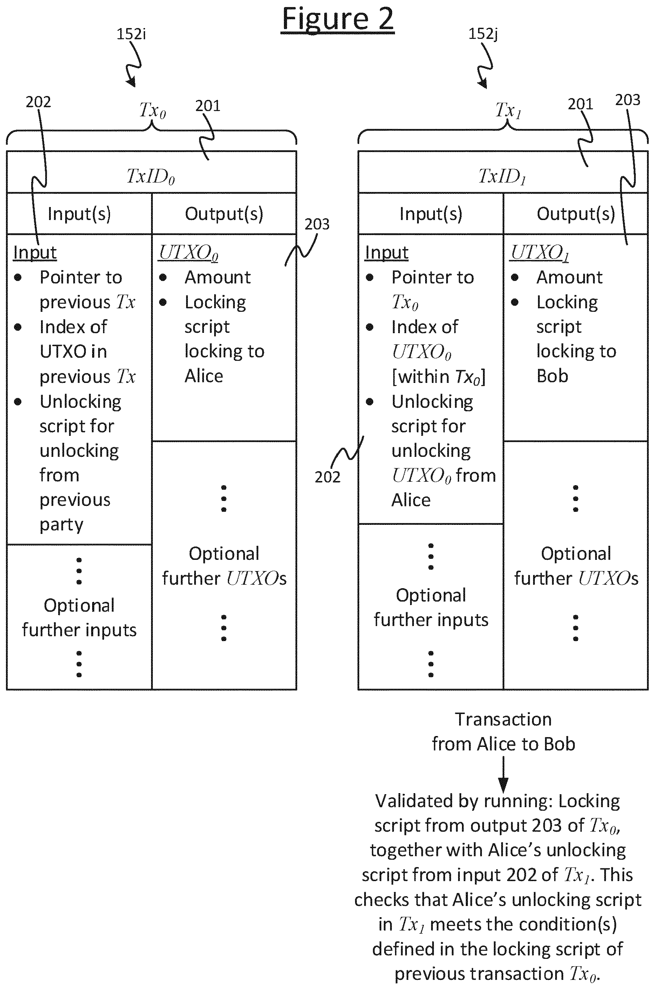

Figure 2 illustrates an example transaction protocol. This is an example of a UTXO-based protocol. A transaction 152 (abbreviated "Tx") is the fundamental data structure of the blockchain 150 (each block 151 comprising one or more transactions 152). The following will be described by reference to an output-based or "UTXO" based protocol. However, this is not limiting to all possible embodiments. Note that while the example UTXO-based protocol is described with reference to bitcoin, it may equally be implemented on other example blockchain networks.

In a UTXO-based model, each transaction ("Tx") 152 comprises a data structure comprising one or more inputs 202, and one or more outputs 203. Each output 203 may comprise an unspent transaction output (UTXO), which can be used as the source for the input 202 of another new transaction (if the UTXO has not already been redeemed). The UTXO includes a value specifying an amount of a digital asset. This represents a set number of tokens on the distributed ledger. The UTXO may also contain the transaction ID of the transaction from which it came, amongst other information. The transaction data structure may also comprise a header 201, which may comprise an indicator of the size of the input field(s) 202 and output field(s) 203. The header 201 may also include an ID of the transaction. In embodiments the transaction ID is the hash of the transaction data (excluding the transaction ID itself) and stored in the header 201 of the raw transaction 152 submitted to the nodes 104.

Say Alice 103a wishes to create a transaction 152j transferring an amount of the digital asset in question to Bob 103b. In Figure 2 Alice's new transaction 152j is labelled "*Tx₁".* It takes an amount of the digital asset that is locked to Alice in the output 203 of a preceding transaction 152i in the sequence, and transfers at least some of this to Bob. The preceding transaction 152i is labelled *"Tx₀"* in Figure 2. *Tx₀* and *Tx₁* are just arbitrary labels. They do not necessarily mean that *Tx₀* is the first transaction in the blockchain 151, nor that *Tx₁* is the immediate next transaction in the pool 154. *Tx₁* could point back to any preceding (i.e. antecedent) transaction that still has an unspent output 203 locked to Alice.

The preceding transaction *Tx₀* may already have been validated and included in a block 151 of the blockchain 150 at the time when Alice creates her new transaction *Tx₁,* or at least by the time she sends it to the network 106. It may already have been included in one of the blocks 151 at that time, or it may be still waiting in the ordered set 154 in which case it will soon be included in a new block 151. Alternatively *Tx₀* and *Tx₁* could be created and sent to the network 106 together, or *Tx₀* could even be sent after *Tx₁* if the node protocol allows for buffering "orphan" transactions. The terms "preceding" and "subsequent" as used herein in the context of the sequence of transactions refer to the order of the transactions in the sequence as defined by the transaction pointers specified in the transactions (which transaction points back to which other transaction, and so forth). They could equally be replaced with "predecessor" and "successor", or "antecedent" and "descendant", "parent" and "child", or such like. It does not necessarily imply an order in which they are created, sent to the network 106, or arrive at any given blockchain node 104. Nevertheless, a subsequent transaction (the descendent transaction or "child") which points to a preceding transaction (the antecedent transaction or "parent") will not be validated until and unless the parent transaction is validated. A child that arrives at a blockchain node 104 before its parent is considered an orphan. It may be discarded or buffered for a certain time to wait for the parent, depending on the node protocol and/or node behaviour.

One of the one or more outputs 203 of the preceding transaction *Tx₀* comprises a particular UTXO, labelled here *UTXO₀.* Each UTXO comprises a value specifying an amount of the digital asset represented by the UTXO, and a locking script which defines a condition which must be met by an unlocking script in the input 202 of a subsequent transaction in order for the subsequent transaction to be validated, and therefore for the UTXO to be successfully redeemed. Typically the locking script locks the amount to a particular party (the beneficiary of the transaction in which it is included). I.e. the locking script defines an unlocking condition, typically comprising a condition that the unlocking script in the input of the subsequent transaction comprises the cryptographic signature of the party to whom the preceding transaction is locked.

The locking script (aka scriptPubKey) is a piece of code written in the domain specific language recognized by the node protocol. A particular example of such a language is called "Script" (capital S) which is used by the blockchain network. The locking script specifies what information is required to spend a transaction output 203, for example the requirement of Alice's signature. Unlocking scripts appear in the outputs of transactions. The unlocking script (aka scriptSig) is a piece of code written the domain specific language that provides the information required to satisfy the locking script criteria. For example, it may contain Bob's signature. Unlocking scripts appear in the input 202 of transactions.

So in the example illustrated, *UTXO₀* in the output 203 of *Tx₀* comprises a locking script [Checksig *P_{A}*] which requires a signature Sig *P_{A}* of Alice in order for *UTXO₀* to be redeemed (strictly, in order for a subsequent transaction attempting to redeem *UTXO₀* to be valid). [Checksig *P_{A}*] contains a representation (i.e. a hash) of the public key *P_{A}* from a public-private key pair of Alice. The input 202 of *Tx₁* comprises a pointer pointing back to *Tx₁* (e.g. by means of its transaction ID, *TxID₀,* which in embodiments is the hash of the whole transaction *Tx₀*). The input 202 of *Tx₁* comprises an index identifying *UTXO₀* within *Tx₀,* to identify it amongst any other possible outputs of *Tx₀.* The input 202 of *Tx₁* further comprises an unlocking script <Sig *P_{A}>* which comprises a cryptographic signature of Alice, created by Alice applying her private key from the key pair to a predefined portion of data (sometimes called the "message" in cryptography). The data (or "message") that needs to be signed by Alice to provide a valid signature may be defined by the locking script, or by the node protocol, or by a combination of these.

When the new transaction *Tx₁* arrives at a blockchain node 104, the node applies the node protocol. This comprises running the locking script and unlocking script together to check whether the unlocking script meets the condition defined in the locking script (where this condition may comprise one or more criteria). In embodiments this involves concatenating the two scripts: $\left.\left〈Sig {P}_{A}\right〉\left〈{P}_{A}\right〉\right‖ \left[Checksig {P}_{A}\right]$ where "∥" represents a concatenation and "<...>" means place the data on the stack, and "[...]" is a function comprised by the locking script (in this example a stack-based language). Equivalently the scripts may be run one after the other, with a common stack, rather than concatenating the scripts. Either way, when run together, the scripts use the public key *P_{A}* of Alice, as included in the locking script in the output of *Tx₀,* to authenticate that the unlocking script in the input of *Tx₁* contains the signature of Alice signing the expected portion of data. The expected portion of data itself (the "message") also needs to be included in order to perform this authentication. In embodiments the signed data comprises the whole of *Tx₁* (so a separate element does not need to be included specifying the signed portion of data in the clear, as it is already inherently present).

The details of authentication by public-private cryptography will be familiar to a person skilled in the art. Basically, if Alice has signed a message using her private key, then given Alice's public key and the message in the clear, another entity such as a node 104 is able to authenticate that the message must have been signed by Alice. Signing typically comprises hashing the message, signing the hash, and tagging this onto the message as a signature, thus enabling any holder of the public key to authenticate the signature. Note therefore that any reference herein to signing a particular piece of data or part of a transaction, or such like, can in embodiments mean signing a hash of that piece of data or part of the transaction.

If the unlocking script in *Tx₁* meets the one or more conditions specified in the locking script of *Tx₀* (so in the example shown, if Alice's signature is provided in *Tx₁* and authenticated), then the blockchain node 104 deems *Tx₁* valid. This means that the blockchain node 104 will add *Tx₁* to the ordered pool of pending transactions 154. The blockchain node 104 will also forward the transaction *Tx₁* to one or more other blockchain nodes 104 in the network 106, so that it will be propagated throughout the network 106. Once *Tx₁* has been validated and included in the blockchain 150, this defines *UTXO₀* from *Tx₀* as spent. Note that *Tx₁* can only be valid if it spends an unspent transaction output 203. If it attempts to spend an output that has already been spent by another transaction 152, then *Tx₁* will be invalid even if all the other conditions are met. Hence the blockchain node 104 also needs to check whether the referenced UTXO in the preceding transaction *Tx₀* is already spent (i.e. whether it has already formed a valid input to another valid transaction). This is one reason why it is important for the blockchain 150 to impose a defined order on the transactions 152. In practice a given blockchain node 104 may maintain a separate database marking which UTXOs 203 in which transactions 152 have been spent, but ultimately what defines whether a UTXO has been spent is whether it has already formed a valid input to another valid transaction in the blockchain 150.

If the total amount specified in all the outputs 203 of a given transaction 152 is greater than the total amount pointed to by all its inputs 202, this is another basis for invalidity in most transaction models. Therefore such transactions will not be propagated nor included in a block 151.

Note that in UTXO-based transaction models, a given UTXO needs to be spent as a whole. It cannot "leave behind" a fraction of the amount defined in the UTXO as spent while another fraction is spent. However the amount from the UTXO can be split between multiple outputs of the next transaction. E.g. the amount defined in *UTXO₀* in *Tx₀* can be split between multiple UTXOs in *Tx₁.* Hence if Alice does not want to give Bob all of the amount defined in *UTXO₀,* she can use the remainder to give herself change in a second output of *Tx₁,* or pay another party.

In practice Alice will also usually need to include a fee for the bitcoin node 104 that successfully includes her transaction 104 in a block 151. If Alice does not include such a fee, *Tx₀* may be rejected by the blockchain nodes 104, and hence although technically valid, may not be propagated and included in the blockchain 150 (the node protocol does not force blockchain nodes 104 to accept transactions 152 if they don't want). In some protocols, the transaction fee does not require its own separate output 203 (i.e. does not need a separate UTXO). Instead any difference between the total amount pointed to by the input(s) 202 and the total amount of specified in the output(s) 203 of a given transaction 152 is automatically given to the blockchain node 104 publishing the transaction. E.g. say a pointer to *UTXO₀* is the only input to *Tx₁,* and *Tx₁* has only one output *UTXO₁.* If the amount of the digital asset specified in *UTXO₀* is greater than the amount specified in *UTXO₁,* then the difference may be assigned by the node 104 that wins the proof-of-work race to create the block containing *UTXO₁.* Alternatively or additionally however, it is not necessarily excluded that a transaction fee could be specified explicitly in its own one of the UTXOs 203 of the transaction 152.

Alice and Bob's digital assets consist of the UTXOs locked to them in any transactions 152 anywhere in the blockchain 150. Hence typically, the assets of a given party 103 are scattered throughout the UTXOs of various transactions 152 throughout the blockchain 150. There is no one number stored anywhere in the blockchain 150 that defines the total balance of a given party 103. It is the role of the wallet function in the client application 105 to collate together the values of all the various UTXOs which are locked to the respective party and have not yet been spent in another onward transaction. It can do this by querying the copy of the blockchain 150 as stored at any of the bitcoin nodes 104.

Note that the script code is often represented schematically (i.e. not using the exact language). For example, one may use operation codes (opcodes) to represent a particular function. "OP_..." refers to a particular opcode of the Script language. As an example, OP_RETURN is an opcode of the Script language that when preceded by OP_FALSE at the beginning of a locking script creates an unspendable output of a transaction that can store data within the transaction, and thereby record the data immutably in the blockchain 150. E.g. the data could comprise a document which it is desired to store in the blockchain.

Typically an input of a transaction contains a digital signature corresponding to a public key *P_{A}.* In embodiments this is based on the ECDSA using the elliptic curve secp256k1. A digital signature signs a particular piece of data. In some embodiments, for a given transaction the signature will sign part of the transaction input, and some or all of the transaction outputs. The particular parts of the outputs it signs depends on the SIGHASH flag. The SIGHASH flag is usually a 4-byte code included at the end of a signature to select which outputs are signed (and thus fixed at the time of signing).

The locking script is sometimes called "scriptPubKey" referring to the fact that it typically comprises the public key of the party to whom the respective transaction is locked. The unlocking script is sometimes called "scriptSig" referring to the fact that it typically supplies the corresponding signature. However, more generally it is not essential in all applications of a blockchain 150 that the condition for a UTXO to be redeemed comprises authenticating a signature. More generally the scripting language could be used to define any one or more conditions. Hence the more general terms "locking script" and "unlocking script" may be preferred.

### SIDE CHANNEL

As shown in Figure 1, the client application on each of Alice and Bob's computer equipment 102a, 120b, respectively, may comprise additional communication functionality. This additional functionality enables Alice 103a to establish a separate side channel 107 with Bob 103b (at the instigation of either party or a third party). The side channel 107 enables exchange of data separately from the blockchain network. Such communication is sometimes referred to as "off-chain" communication. For instance this may be used to exchange a transaction 152 between Alice and Bob without the transaction (yet) being registered onto the blockchain network 106 or making its way onto the chain 150, until one of the parties chooses to broadcast it to the network 106. Sharing a transaction in this way is sometimes referred to as sharing a "transaction template". A transaction template may lack one or more inputs and/or outputs that are required in order to form a complete transaction. Alternatively or additionally, the side channel 107 may be used to exchange any other transaction related data, such as keys, negotiated amounts or terms, data content, etc.

The side channel 107 may be established via the same packet-switched network 101 as the blockchain network 106. Alternatively or additionally, the side channel 301 may be established via a different network such as a mobile cellular network, or a local area network such as a local wireless network, or even a direct wired or wireless link between Alice and Bob's devices 102a, 102b. Generally, the side channel 107 as referred to anywhere herein may comprise any one or more links via one or more networking technologies or communication media for exchanging data "off-chain", i.e. separately from the blockchain network 106. Where more than one link is used, then the bundle or collection of off-chain links as a whole may be referred to as the side channel 107. Note therefore that if it is said that Alice and Bob exchange certain pieces of information or data, or such like, over the side channel 107, then this does not necessarily imply all these pieces of data have to be send over exactly the same link or even the same type of network.

### VERIFYING MEMBERSHIP OF A SET OF TRANSACTIONS

As mentioned in the Summary, it would be desirable to enable a third party to verify whether two parties (a first and second party, Alice and Bob) agree on the membership of a set of blockchain transactions conducted between those two parties (i.e. agree which transactions are part of the set). It would also be desirable to do so in a way that enables the identity of a party making a misrepresentation to be demonstrated. For instance, the third party may be a tax authority checking that both Alice and Bob have declared the same set of transactions for tax purposes. Or Alice and Bob could be two departments within a company and the third party could be a private auditor checking that the two departments have reported the same transactions for auditing purposes. As another example, the blockchain could be a consortium blockchain used to track the provenance of regulated goods such as gemstones or animal products. In this case the third party could be a regulatory body checking that one party has not tried to hide a nefarious transaction. Note again that "Alice" and "Bob" are just labels, and each could represent an individual or an organization such as a company, government institution, academic institution, charity or club, etc., or a subdivision such as a department within such an organization.

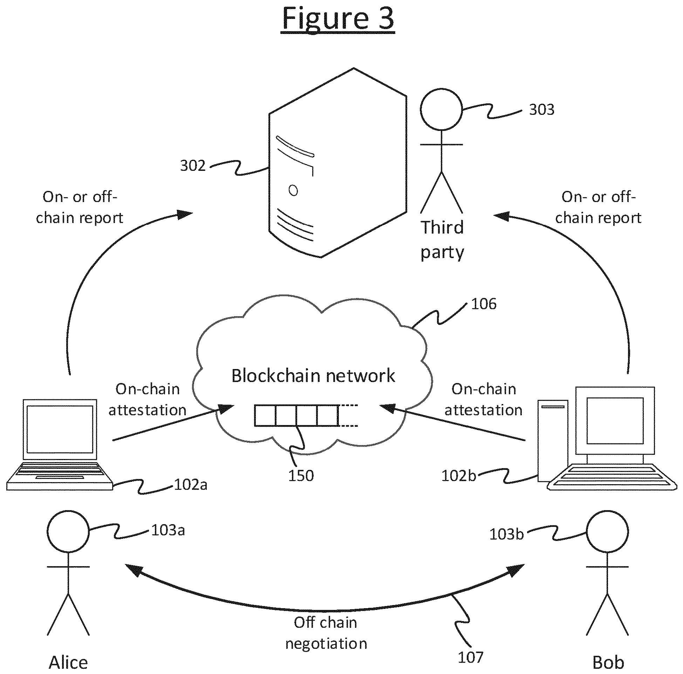

Figure 3 shows an example system in accordance with embodiments disclosed herein. The system comprises the computer equipment 102a of the first party 103a (Alice), the computer equipment 102b of the second party 103b (Bob), and computer equipment 302 of the third party 303 (e.g. tax authority, auditor, etc.). In the following, various actions will be described as being performed by the first party, by the second party or by the third party, or such like, but it will be appreciated that this is a short-hand meaning that the actions are performed by the respective party 103a, 103b, 303 using the computer equipment 102a, 102b, 302 of the respective party.

The computer equipment 302 of the third party 303 may take the form of a server system comprising one or more physical server units located at one or more geographical sites. The various actions described herein performed by the third party 303 may be performed using software (code) stored in memory of the third party's computer equipment 302 and run on processing apparatus of the third party computer equipment 302. This memory may comprise one or more memory units and the processing apparatus may comprise one or more processing units. Similar comments as to the various options for the implementation of the memory and processing apparatus (magnetic memory, electronic memory, CPU, GPU etc.) apply as already outlined in relation to the first and second parties' computer equipment 102a, 102b and/or nodes 104.

The third party computer equipment 302 is connected to the blockchain network 106, at least to enable it to inspect transactions 152 stored in blocks 151 on the blockchain 150. The first and second parties' computer equipment 102a, 102b is also connected to the blockchain network 106 to enable them to conduct blockchain transactions 152 between them as discussed previously. Further, as will be discussed in more detail shortly, this enables them to record additional "attestation" transactions which contain an attestation to the transactions conducted between Alice and Bob (and potentially between themselves and other parties, such as Charlie, etc.). E.g. this could take the form of a hash tree root (Merkle root) of a hash tree whereby the leaves are the IDs of the transactions in the set.

The system is also arranged to enable each of the first and second party's equipment 102a, 102b to send reports to the third party. These reports comprise an indication of all the (purported) transactions conducted between them, e.g. indicated in terms of transaction ID (TxID).

The system may also comprise an off-chain side channel 107 between Alice and Bob, as described previously. This enables Alice and Bob to negotiate a transaction between them before sending it for recordal on the blockchain 150. The protocol for this, e.g. Simplified Payment Verification (SPV), may also involve an exchange of information which will later enable them to be identified if a misrepresentation is detected.

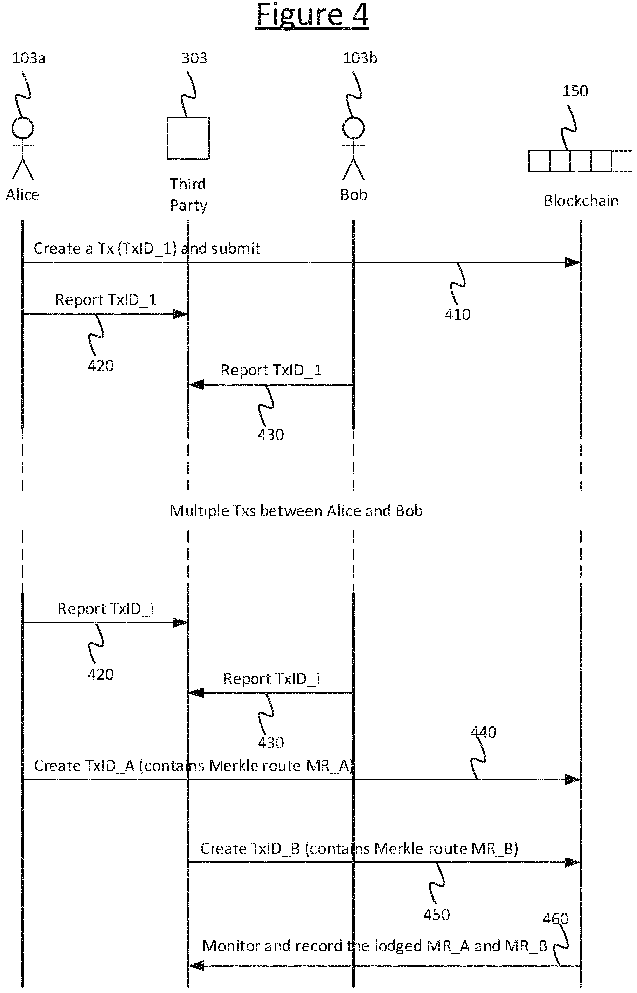

Figure 4 shows methods steps performed by the three parties in accordance with embodiments disclosed herein.

At step 410, Alice and Bob conduct a blockchain transaction between them. This involves recording a blockchain transaction on the blockchain 150 transacting between Alice and Bob, for example using any of the techniques discussed previously in relation to Figures 1 and 2. In an output-based (e.g. UTXO-based) model this means that the transaction 152 comprises an input 202 which points to an output of another, preceding transaction that is locked to Alice. The input 202 of the present transaction (the one between Alice and Bob) comprises an unlocking script that comprises a signature of Alice and thus unlocks the pointed-to output of the preceding transaction. The transaction between Alice and Bob comprises an onward output 203 comprising a locking script locking the output to Bob, i.e. requiring a signature of Bob to unlock. According to various known transaction formats, this output 203 may contain an address of Bob which is based on a public key of Bob. In a typical transaction format the address comprises a hash of Bob's public key. However in principle it could be some other transform or simply the public key itself. In a typical format such as tat used for Bitcoin, it is a hashed form. This is because Bob's key appears in the locking script, which is typically pay-to-public-key-hash form. In contrast, Alice's public key appears explicitly in the transaction because the public key itself (rather than hash) appears in the unlocking script.

Once formed, the transaction may be sent to the blockchain network 106 by either Alice or Bob, either directly or via another, intermediate party (not shown).

In embodiments, the step 410 of conducting the transaction between Alice and Bob may comprise agreeing the transaction between Alice and Bob before it is sent to be recorded on-chain. This may comprise engaging in a protocol between Alice and Bob via an off-chain side channel 107. E.g. the protocol could be SPV (Simplified Payment Verification). The protocol may comprise exchanging a template version of the transaction between Alice and Bob over the side channel 107, with each party filling in parts of the transaction over one or more exchanges. And/or, the protocol may comprise exchanging identification information between the parties enabling them to be identified (bob provides identification information of himself to Alice and/or vice versa). For instance this may comprise Bob filling in his address based on his public key (e.g. a hash of his public key) in the template transaction, or providing his address or public key to Alice for her to include the address in the transaction. The exchanged identification information may also comprise information (separate from the template transaction) linking the public key to Bob.

Typically nowadays parties do not use the same public key for each transaction. Instead they have a master public key, and then for each induvial transaction, derive a transaction-specific child public key from the master for use in the locking script of that particular transaction. Amongst other things, this means that the child public key or address alone does not identify Bob. The child public key is related to the master public key by a derivation function, which is parameterized by additional information referred to herein as derivation information. In other words, the child public key is a function of the master public key and one or more parameters, the parameter(s) being the derivation information and the function being the derivation function. The derivation information comprises one or more elements specific to the particular transaction, such as an index value of the transaction, or information about the content or purpose of the transaction such as an invoice, sales order or receipt. This links the child public key to the particular transaction. The derivation information may also comprise an element known as a chain code, which is common to all child keys derived from a given master. Details of suitable child key derivation functions are, in themselves, known to a person skilled in the art.

In the protocol at step 410, the identification information supplied by Bob to Alice may comprise his master public key and/or derivation information, preferably both so that Alice can verify that the child public key or address is linked to Bob's master public key. Either way, Alice may also provide such information to the third party 303 later if it is detected that Bob has made a misrepresentation (as discussed in more detail shortly). Bob may need to signal to Alice which type of derivation function he is using (e.g. which standard), and Alice may need to signal this to the third party 303, or alternatively the type of derivation function used could simply be an assumed default.

In embodiments, the master public key of each party is linked to a public identify of the party by a digital certificate authority (CA, not shown). That is, the CA issues a digital certificate signed by the CA and linking the master public key to the public identity. The public identity could for example comprise a human-readable name and/or address of the party. In embodiments, the identification information exchanged at step 410 may comprise a copy of Alice and/or Bob's digital certificate.

At step 420, Alice sends a report of the blockchain transaction she conducted with Bob to the third party 303. This may be sent via an off-chain side channel (not shown) between Alice and the third party 303. Alternatively it could be reported via an on-chain channel, i.e. by Alice recording on chain another blockchain transaction addressed to the third party to enable them to find it on chain (which in the case of an output-based model means it has an output containing an address of the third party, which the third party may monitor for on chain). Either way, the report comprises an indication of the transaction. This indication could comprise a copy of the transaction itself, but that would be cumbersome in terms of quantity of data. Therefore more preferably, the indication of the transaction may comprise just an identifier of the transaction, e.g. the transaction ID (TxID).

At step 430, Bob also sends (or at least is supposed to send) a report of the same blockchain transaction which he conducted with Alice to the third party 303. Everything said above about the way in which Alice's report is formulated and sent may apply mutatis mutandis to Bob's report.

The method continues with Alice and Bob conducting one or more additional transactions between them over some period of time (i.e. one or more additional instances of step 410 are performed). E.g. Bob could be a supplier with whom Alice does regular business. Steps 420 and 430 are performed for each instance of step 410 (or at least both parties are supposed to do so if they are behaving honestly). As shown in Figure 4, this could comprise a separate instance of steps 420 and 430 for each transaction 410. I.e. each of Alice and Bob sends an individual report message to the third party as-and-when they conduct each transaction. E.g. the report could be sent in response to agreeing the transaction via the protocol over the side channel 107, or in response to confirming that the transaction has actually been recorded in a block 151 on the blockchain 150.

Alternatively however, it is also not excluded that Alice could save up a batch of transactions to be indicated to the third party 303 in the same report message (e.g. as a list of transaction IDs per message). For instance she could send a combined report of all qualifying transactions she was involved with each week, month or year. Similar comments may apply to Bob.

Note that each of Alice and Bob may also be sending, to the third party 303, similar reports for transactions they conducted with other parties, e.g. Charlie. So for example Alice's reports will also include reports of the TxlDs between her and Charlie.

At step 440 Alice generates an attestation of a set of transactions in which she has been involved, including at least the transactions conducted 410 between Alice and Bob. This should be the same set that she has reported to the third party 303 in the reports 420. For example this set could be all transactions or all qualifying transactions (e.g. those above a certain threshold value) within a certain time period. E.g. she may generate a weekly, monthly or yearly attestation. The attestation comprises an attestation value generated by applying an obfuscating transform (preferably an irreversible transform) to the indications of the transactions (e.g. to the transaction IDs) she reported to the third party 303, for example all those reported in the last time period (e.g. last week, month or year). In embodiments the transform takes the form of a hash based function, comprising one or more hashes of a combination of the reported transaction indictors (e.g. transaction IDs).

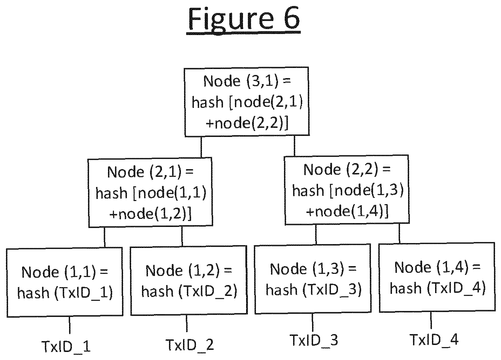

A simple example would be a hash or double hash of the concatenation of the transaction indictors (e.g. IDs). More preferably however, for reasons that will become apparent later, the attestation value is a root of a hash tree. A hash tree is also sometimes called a Merkle tree, and a hash root called a Merkle root. In the present case the leaves of the hash trees are the transaction indicators (e.g. IDs). At the lowest layer of the tree, each node is the hash of a corresponding one of the leaves. At the next layer of the tree up, each node is the hash of the concatenation of a different respective subset (typically two) of the nodes in the layer below, and so forth up the layers of the tree until a single root value is reached. A simple example is shown in Figure 6, where "+" here represents a concatenation (though in principle another type of combining operation could be used). Note that the term Merkle tree, Merkel root and Merkle path as used herein do not necessarily imply a binary hash tree (i.e. where the subset combined from each layer to the next is only two nodes), though that is typically the most common implementation.

A Merkel tree (hash tree) has the useful property that to prove that a given leaf is a member of the set, one only needs the value of the leaf, the Merkel root, and the Merkle path between the leaf and root (i.e. the values of all the hashes along the path from leaf to root). You do not need the values of all the leaves. This make it possible to provide, for example, that TxID_1 is a member of the set without giving away or knowing any of TxID_2, TxID_3, TxID_4, etc. This can be useful for privacy reasons.

Whatever form the attestation takes, Alice then records this attestation in a further transaction on the blockchain 150. This may be referred to herein as an attestation transaction. It is separate to the transactions between Alice and Bob, Alice and Charlie, etc. The attestation transaction may be addressed to the third party 303 to make it easier for them to find on chain. In an output-based model (e.g. UTXO-based model), this means that an output 203 of the attestation transaction comprises an address of the third party 303. E.g. the address may based on a public key of the third party, e.g. a hash of their public key, and the output may be locked to that public key and requiring a corresponding private key of the third party 303 to unlock. If the blockchain protocol being used does not allow zero-value outputs, the amount defined in this output could be a dust (negligible) value, or it could be an actual substantive payment to the third party 303 (e.g. an actual tax payment, or a payment for an auditing service).

At step 450 Bob generates an attestation of a set of transactions in which he has been involved, including at least the transactions conducted 410 between Alice and Bob. The explanation above in relation to Alice's attestation applied mutatis mutandis to Bob. Bob does not necessarily have to use the same form of attestation as Alice, though in embodiments he does (e.g. a Merkle root).

At step 460 the third party 303 monitors for the attestation transactions from Alice and Bob on the blockchain 150. In embodiments this may comprise monitoring the blockchain 150 for transactions addressed to the third party 303, e.g. on the basis that they have a public key of the third party in an output of the transaction. In practice this monitoring could be implemented by the third party 303 subscribing to a service which monitors the blockchain 150 for defined activity.

In alternative embodiments the third party 303 does not have to monitor the blockchain 150 and instead Alice and Bob alter the third party to the presence of their attestation transactions on chain, e.g. directing the third party to the attestation transaction by sending a pointer to the transaction.

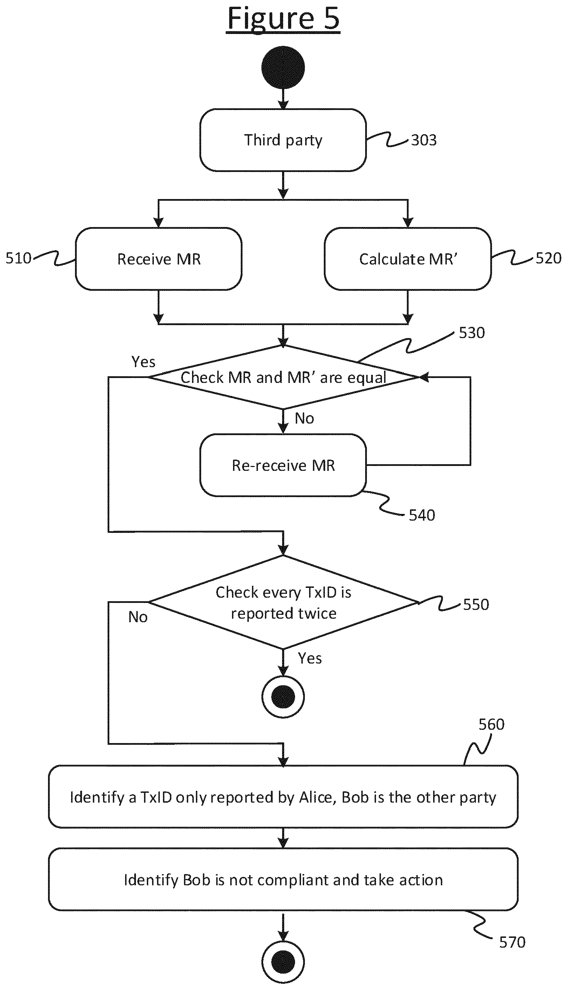

Figure 5 shows a method that may be performed by the third party 303 in accordance with embodiments disclosed herein.

At step 510, the third party 303 retrieves Alice's attestation value (e.g. Merkle root MR) from Alice's attestation transaction on the blockchain 150. At step 520, the third party 303 computes the attestation value (e.g. Merkle root MR') from the set of transaction indicators (e.g. IDs) it has received from Alice's report message(s) 420. These two steps could be performed in either order. At step 530 the third party 303 checks whether these are equal. If not, at step 540 the third party may ask Alice to resubmit her attestation and loop back to step 530.

Steps 510 to 540 are also performed mutatis mutandis in relation to Bob.

Assuming (or once) the attested and computed attestation values for Alice do match, and similarly for Bob, then the method proceeds to step 550. Here the third party 303 checks that every transaction reported (420) by Alice was also reported (430) by Bob. This is done by comparing the transaction indictors (e.g. IDs) reported by both parties. This could for example comprise checking all the indicated transactions within a given time period, such as a week, month or year. If Alice and Bob have reported the same set of transactions (e.g. for the given time period), then likely both are honest and there is nothing suspect, and the method ends. In embodiments, in this scenario the third party 303 may discard the reported transaction IDs from their storage (possibly after performing some processing on them such as to process the indicated transactions for tax purposes, and/or after holding them for some defined retention period).

If on the other hand one of Alice and Bob has reported a transaction that the other has not and would have been expected to (e.g. because it was a transaction from the given time period, e.g. the last week, month or year), then the transaction that is present in one party's reporting and missing from the other's is treated as a suspect transaction. In this scenario the method branches to step 560. Here the third party 303 determines the indication (e.g. transaction ID) of the transaction that one party (e.g. Alice) has reported and which the other party (e.g. Bob) has not. This can be determined from Alice's report 420. Then at step 570, the third party 303 identifies that the party who did not report (e.g. Bob) is not compliant and takes action against him. In embodiments this may comprise obtaining information to establish the identity of Bob so that it can this can be used as evidence.

Assuming it is Bob who is not compliant, then in response to the determination of the non-matching reporting, the third party 303 may send a request to Alice to ask her to supply some or all of the identification information which she originally received from Bob during the stage 410 of negotiating the transaction over the side channel 107. This may comprise the derivation information mentioned earlier (e.g. chain code, index and/or invoice). Given Bob's master public key, the derivation information, and the known form (type) of derivation function used, then the third party 303 can compute what Bob's child public key for the suspect transaction should be. Bob's master public key may be provided to the third party 303 by Alice in response to the request, or may have been supplied previously by Bob, e.g. during an initial registration phase before he started using the service. The type of derivation function used may be a default, or may be signalled by Alice, or may have been previously registered by Bob. The third party 303 can also obtain the address that was actually used in the suspect transaction, either by reading it from the suspect transaction on chain or receiving from Alice. The third party 303 can then compare this with the computed child public key to determine whether the computed child public key is the same is the one used for Bob's address. E.g. in the case where the address is a hash of the public key, this comparison will comprise hashing the computed public key and comparing the result with the address. Assuming they match, this establishes that the suspect transaction is linked to the master public key of Bob. This may be used as evidence that it was Bob who made the misrepresentation, e.g. to be presented to a fourth party such as the police or a court.

For completeness, note that if it was Alice's behaviour that was being checked, then in a typical transaction format her child public key appears explicitly in the transaction because the public key itself (rather than hash) appears in the unlocking script. So in this case the comparison with the computed child public key need not involve a hash. Also in principle, in alternative transaction formats, Bob' address could simply comprise a copy of his public key, not necessarily a transform thereof such as a hash.

In addition to the link between child and master public key, the master public key of Bob may be linked to a public identity of Bob by a digital certificate issued by a certificate authority (CA). The certificate linking the two may be obtained by Alice from Bob during the protocol 410, and then later supplied by Alice to the third party 303 in response to the request when a suspect transaction is detected. Alternatively the certificate could have been previously registered with the third party 303 by Bob, or may be obtained by the third party 303 requesting it directly from the CA. Either way, this may form part of the evidence that it was indeed the party known as Bob who made the misrepresentation.

Optionally, both Alice and Bob register their master public keys with the third party 303 prior to using the service. This is not necessarily a requirement, since in any case Bob must give Alice his master key (because of the reason above). The master key is preferably signed by a certificate authority (CA). This could be the third party themselves, or a separate CA.

In embodiments, Bob gives the following three things to Alice in the set-up phase 410: his master key, a certificate from a CA linking his master key to his identity, and the child derivation information. In the case that there is a mis-match in records, Alice may send all three things to the third party 303. In this case the third party 303 has everything they need to prove a link between Bob's identity and the transaction. In alternative implementations however, the third party 303 may already have Bob's master public key and/or certificate from the registration phase, or may obtain the certificate directly from the CA. Therefore in some other embodiments Alice may only send the derivation information.

In embodiments the third party 303 may store evidence of Bob's non-compliance (i.e. his misrepresentation). To do this the third party 303 does not need to store all the reported indications (e.g. all the transaction IDs) from Alice and Bob's full reports. All the third party 303 really needs to store is evidence of wrongdoing. Only a single transaction is required to show this. Therefore once the third party 303 identifies a suspect transaction, then it stores that transaction (or identifier thereof, e.g. TxID), the attestation, and the link to Bob's identity in the transaction. In the case of a Merkle root it also stores the Merkel path. The third party 303 is then free to delete the rest of the reported transaction indications (e.g. IDs). The third party 303 is left with just one transaction. This provides evidence of wrongdoing because Bob will not be able to prove the inclusion of this transaction in his public, on-chain attestation (e.g. cannot provide that it was included in his Merkle tree).

The Merkle tree implementation may be particularly advantageous for privacy. The leaves of Alice's Merkle tree may include indications (e.g. IDs) of transactions conducted both with Bob and with other parties such as Charlie. The fact that Charlie conducted a certain set of transactions with Alice may be confidential or sensitive, and assuming Charlie is not suspected of any misrepresentation, it would be desirable not to need to give away this information in the evidence presented to the fourth party (e.g. police or court). As mentioned, a Merkle tree allows to prove that a candidate leaf is a member of the set given only the root and Merkle path. Hence only this need be stored and/or presented in the evidence, and not the indication (e.g. TxlDs) of Charlie's transactions with Alice. The third party 303 can determine the relevant Merkle path because we have assumed that Alice has sent all the expected transactions to the third part 303. If the third party 303 has all transactions (in a certain order) then they can construct the Merkle tree of Alice and reproduce the Merkle root. If the whole tree is known, they can easily calculate the path to any leaf.

Note: while in the above it has been described that all of the transactions between Alice and Bob, and Alice and Charlie etc., and the first and second attestation transactions, as well as any other transactions used for on-chain signalling, are all recorded on the same blockchain 150, this does not necessarily have to be the case. E.g. the transactions between Alice and Bob could be transactions of one blockchain, whilst the attestations could be recorded on another blockchain. Or the transactions between Alice and Bob could include transactions conducted via different blockchains. Or Alice and Bob could transact via one blockchain whilst Alice and Charlie transact via another blockchain, etc.

Note also: while examples have been described herein in terms of a transaction from Alice to Bob, similar methods could also apply for transactions from Bob to Alice, or between Alice and Charlie etc. Also while exemplified in terms of Alice assisting in identifying a misrepresentation by Bob, again the method could apply equally the other way around (whether Bob is the payer or payee).

### EXAMPLE APPLICATION - TAX LODGING

The following explores an example application of the disclosed system whereby the transparency and pseudonymity of a blockchain public ledger can be used to incentivise tax compliance. Particularly, this can be used to provide a system of recording, or 'lodging', tax receipts on the blockchain to identify users that are tax non-compliant. The system only relies on some honest users to identify many non-compliant users.

The privacy model of at least some blockchains such as the Bitcoin blockchain means that identity information is firewalled from on-chain transaction information. However, identity information can still be swapped between transacting parties off-chain. In fact, existing regulations often require identity information to be swapped between transacting parties.

For example, the 5th Anti-Money Laundering Directive (AMLD5) requires entities (individuals and/or companies) to report the identity information for any exchanges of more than €150 within the United Kingdom and Europe.

Embodiments of the disclosed system may work as follows. Consider a blockchain transaction between two parties Alice and Bob. To comply with AML regulations, Alice and Bob exchange information off-chain which provably links their identity to the transaction. Alice and Bob independently send the transaction ID (TxID) to the same tax authority off-chain. Once a month, Alice and Bob record the Merkle root of their transactions on-chain to the tax authority. Since Alice and Bob both lodge their TxlDs to the same authority, the authority should receive each TxID twice. If they only receive one TxID say, from Alice, they will investigate and ask with whom she is transacting. Alice will answer that it was Bob, and provide the authority with a provable link from his identity to the transaction. The tax authority now has an evidence trail for Bob's non-compliance.

By way of an example implementation, sub-section 1 below dissects a Bitcoin transaction and explain how a provable link to identity can be established off-chain. Sub-section 2 describes a system for identifying tax non-compliance (or more generally how to identify set non-membership with a link to identity). Sub-section 3 discusses how much a process of identifying non-compliance can be outsourced to a third party. This works because the off-chain firewall to identity is only compromised for non-compliant users.

### 1. Characteristics of a Bitcoin transaction

Consider a Bitcoin transaction of x satoshis from Alice to Bob. The transaction will look something like this:

| *TxID*₁ | | | |
|---|---|---|---|
| Version | 1 | Locktime | 0 |
| In-count | 1 | Out-count | 2 |
| Input list | | Output list | |
| Outpoint | Unlocking script | Value | Locking script |
| *TxID, Index* | *< Sig*_{*A*₁} *>< PK*_{*A*₁} *>* | *x* satoshi | [P2PKH *PK*_{*B*₁}] |
| | | 0 | **OP_FALSE OP_RETURN** < *Data >* |

This is just a normal transaction. Its structure does not need to be changed at-all. A similar format may be used in other output-based (e.g. UTXO-based) models.

For simplicity no additional inputs or outputs, such as change to Alice, have been considered here. The unlocking script contains a valid signature from the public key *PK*_{*A*₁}, controlled by Alice. The locking script is of Pay-to-Public-Key-Hash form, meaning it requires a signature from the public key *PK*_{*B*₁}, controlled by Bob, to be spent. We have included an optional unspendable OP_FALSE OP_RETURN output with payload Data. It may also be included in other ways, such as with an OP_DROP, or just an OP_RETUTN in other transaction protocols.

Typically, Alice will own a wallet with a master public key *PK_{A}* and possibly an additional piece of information called chain code *C_{A}*. This master key may be associated with her identity, for example by a Certificate Authority (CA) issuing a digital certificate. However, it does not appear on chain. Instead the public key that Alice uses in the transaction is *PK*_{*A*₁} which is not her master key. The public key *PK*_{*A*₁} will be typically derived from *PK_{A}* in a deterministic way. Without the knowledge of how the key is derived, someone looking at transaction *TxID*₁ would not realise that it contains a key controlled by Alice.

In transaction *TxID*₁, there is also included the option to store a payload *Data* in an unspendable output (this is a typical position to store data in a transaction, it could also be in the locking/unlocking scripts followed by an OP_DROP command). The payload *Data* may contain metadata about the transaction. For example:
- Typical receipt data, such as items bought, individual costs, merchant name, timestamp;
- registration and tax code of business(es) involved;
- identity information of the individuals involved; and/or
- receipt

Any of this data may be encrypted, with decryption keys available to Alice, Bob or both. Alternatively, a hash commit of this data may be all that is given in the payload. This allows the metadata to be provably linked to the transaction without any details being given. (Some salt may need to be included to ensure sufficient entropy of the hash preimage.) If a hash commit is used, the hash preimage should be stored in a database. Such a database could be maintained by Alice, Bob or a third party. It may even be a distributed hash table (DHT) where the data is replicated by participants in a network.

The transaction itself may contain inputs and outputs that relate to the payment of tax. We will not go into the details here. The tax need not necessarily be paid in a blockchain transaction, though that is one possibility.

A child key can be provably linked to a master key. A transaction such as *TxID*₁ involves the introduction of a new public key *PK*_{*B*₁} controlled by Bob. As previously mentioned, this public key may be linked to Bob's master key *PK_{B}* which in turn may be linked to his identity. There are typically two ways that this can be done.
1) A BIP32-like process. For example, it could be that *PK*_{*B*₁} follows an unhardened child key derivation path given by ${PK}_{{B}_{1}} = {PK}_{B} + Left 256 - bits of \left\{HMAC512\left(\left.{C}_{B}, {PK}_{B}\right‖i\right)\right\}$
2) A WP42-like process. Here we need Alice and Bob's master keys and a third data m such as an invoice or other metadata known to both Alice and Bob. For example, the public key *PK*_{*B*₁} could be derived according to ${PK}_{{B}_{1}} = {PK}_{B} + \left(\left.{V}_{B}\right‖m\right) ⋅ {PK}_{A}$

This has the feature that both Alice and Bob can provable link *PK*_{*B*₁} with *PK_{A}, PK_{B},* m.

The index i in process (1) may be linked to other data such as an invoice m or public key *PK_{A}* in a way that preserves the features of BIP32 wallet recovery. This unifies both approaches. It has also been investigated as to how multiple outputs and multiple transactions can be linked to the same invoice m. This can enhance the privacy of transactions between Alice and Bob in situations where the Satoshi value is well-known.

### 2. System to lodge tax and identify non-compliance

This subsection describes a system that allows the tax authority to identify the entities which could be tax non-compliant. For simplicity only two entities are considered, Alice and Bob, in this system. They are required to register their master public keys, *PK_{A}* and *PK_{B}* mentioned in subsection 1 above, to the tax authority. This could be established through the issuance of a certificate or a tax code from the tax authority.

Suppose that the tax authority has an well-known public key *PK_{T}* that represents an address used for recording or 'lodging' tax receipts. This account is reserved solely to receive and consolidate the on-chain tax lodgement from Alice and Bob. The public key *PK_{T}* is just an alert address, not how the tax authority receives or sends payments.

The system involves two phases: tax lodging and non-compliance identifying. The details of each phase are described as follows.

**Tax lodging:** The following presents the protocol from the point of view of Alice. But it is identical to the point of view of Bob. This is an example of the method represented schematically in Figure 4.
1. Alice and Bob construct a transaction. Alice and Bob collectively create a transaction *TxID*₁ transferring funds from Alice to Bob. The schematic of *TxID*₁ is referred in section 1.1. Alice and Bob also exchange personal identifiable information that provably links their ID to the public keys used in the transaction. For example, they may give the data needed for the child key derivation explained in section 1.1.
   They also send links to their identity (off-chain). For Bob's security, he should first ask Alice to send him her identity information. He can then send her a transaction template like in a BIP270-like process, along with his identity information. Alice will sign the transaction, making it valid. (If Bob first sends Alice his identity information then Alice may sign the message without revealing her identity information.)
   Either Alice or Bob submit the transaction to the Bitcoin network, and check that the transaction has been accepted to a degree of certainty as they require.
2. Alice and Bob then report the transaction to the tax authority off chain. Alice and Bob separately report the transaction ID *TxID*₁ to the tax authority. This might be done via sending an off-chain message to the tax authority, but in here, we will not specify the way that how to report the transaction IDs.
3. Every transaction *TxIDᵢ* between Alice and Bob should be reported to the tax authority twice, once by Alice and once by Bob. The tax authority may build an internal database to store these transactions. In doing this, each transaction between two entities could be matched effectively.
4. After a regular time period, for example one month, Alice gathers together all her transactions *TxID*₁, *..., TxID_{N}* and constructs a Merkle tree with Merkle root *MR_{A}*. This is similar to how a Merkle root is constructed in a Bitcoin block, but here only the transactions relevant to Alice are used.
5. Alice creates a transaction *TxID_{A}* to the tax authority's public key *PK_{T}.* Bob does the same. The transaction *TxID_{A}* contains the Merkle root *MR_{A}* of the transactions signing with Alice's identity public key. The Merkle root could be the payload *Data* in an unspendable output as referred in section 1.1.
6. Alice and Bob lodge their Merkle roots with the tax authority on-chain. When the transaction *TxID_{A}* and *TxID_{B}* are accepted on the Bitcoin network, the tax authority will receive the Merkle root *MR_{A}* and *MR_{B}.* Sending the transactions on-chain in this way creates an immutable record of Alice's attestation to her tax receipts that month.

**Tax non-compliance identification:** This is an example of the method represented schematically in Figure 5
1. The tax authority receives the Merkle root *MR_{A}* from the transaction *TxID_{A}.*
2. The tax authority then calculates the Merkle root *MR'_{A}* of all the *TxIDs* Alice has sent that month, to check it is as expected.
3. Check *MR_{A}* = *MR'_{A}* (i.e. is the attested Merkle root as expected). If not, the tax authority requires Alice to resubmit a new *MR_{A}.*
4. Repeat steps 1 to 3 for Bob.
5. Check that each transaction is seen twice. Recall that every *TxID* between Alice and Bob has been sent to the tax authority in the phase of tax lodging. In this stage, the tax authority checks that every *TxID* sent that month is reported twice: once by Alice and once by Bob. If yes, the tax authority halts the checking process and identifies that Alice and Bob are compliant that month.
6. Identify which transaction(s) was only seen once, and ask for information for this transaction. The tax authority identifies that a transaction *TxID*₂ is only reported by one party, say Alice. He asks her who was the other party she was transacting with in *TxID*₂. She tells the tax authority it was Bob. The tax authority may require Alice to provide the provable link to Bob's identity in *TxID*₂.
7. The tax authority has now identified that Bob is not compliant and punishes him appropriately.

Figure 5 depicts a process by which a third party 303 such as the tax authority identifies non-compliance by checking the Merkle root (or other such attestation) and the lists of all transactions Alice and Bob have sent. For brevity, the diagram only presents MR (Merkle root) as an example instead of specifying Alice or Bob's Merkle root.

Note that the equality between MR and MR' only indicates that the tax record on-chain matches that on the tax authority, but it does not mean that Alice or Bob is compliant. For instance, four transactions between Alice and Bob that month respectively are *TxID*₁, *TxID*₂, *TxID*₃, *TxID*₄. Alice reports all four transaction IDs and the Merkle root *MR*_{*A*_4} formed from these transactions to the tax authority. Bob only reports three transactions IDs *TxID*₁, *TxID*₂ *, TxID*₃ and the corresponding Merkle root *MR*_{*B*_3} to the tax authority. The tax authority now knows *MR*_{*A*_4} *= MR'*_{*A*_4} and *MR*_{*B*_3} *= MR'*_{*B*_3}*.* But in steps 5 and 6, the tax authority identifies that Bob did not report *TxID*₄ and hence he is not compliant. Additionally, the Merkle root *MR*_{*B*_3} is the evidence that Bob attempts to falsify tax records or to underpay tax illegally.

### 3. Outsourcing to a third-party provider

This subsection will introduce a third-party service provider (SP) as a new role in the system to help the tax authority identify non-compliance more effectively.

As set out in subsection 2 above, the tax authority will check the Merkle roots and each *TxID* to identify tax non-compliance. In fact, this may be a big burden for the tax authority if there are lots of *TxIDs* between Alice and Bob, and/or many entities are needed to be identified by tax authorities.

Thus, in order to lighten the burden of the tax authority in identifying the mismatched transactions, the third-party service provider will monitor the entities' activities on behalf of the tax authority. The meaning of the term 'monitor' comprises collecting information (any transactions sending to the tax authority's public key *PK_{T}*) from the blockchain network, reporting the collected information, verifying the ownership of the public keys associated with entities on the off chain reported *TxIDs,* checking the equality between the compared hash values (e.g. Merkle root).

Verifying the ownership of bitcoin is very important and imperative in the tax non-compliance identification system. The existing method by using the DHT and the Bitcoin blockchain is suited for the ownership verification in our system.

The DHT in subsection 1 above is considered as a database where the data is stored and maintained by participants. Applied here, Alice, Bob, the tax authority and the service provider are the participating nodes, and the data is all the key-value pairs and metadata on the DHT.

The monitoring may be classified into two parts: on-chain and off-chain. The on-chain part is to monitor any transactions sent to the public key *PK_{T},* and the off-chain monitoring is to match each *TxID* entities sent.

The off-chain monitoring is that the tax authority authorizes the service provider to receive every *TxID* sent from Alice and Bob. The service provider retrieves the full data of each *TxID* on the blockchain, and then determines having at least one public key associated with the sender, say Alice, on that *TxID.* Same for every *TxID* that Bob sent. For any mismatching *TxIDs,* the service provider will report them to the tax authority.

The on-chain monitoring is that the tax authority authorizes the service provider to monitor the transactions sent to the tax authority's public key *PK_{T}* on the blockchain. The tax authority registers the public key *PK_{T}* to the service provider monitor any transactions sent to *PK_{T}.* The service provider will identify who was the sender of the Merkle transaction *TxID_{A},* same for *TxID_{B}.* The SP extracts the Merkle root MR, calculates MR', checks the equality between MR and *MR',* and finally sends a message to the tax authority to report the results.

The tax authority will review the reports from the SP's on-chain and off-chain monitoring and take some punishment actions. Note that the tax authority may not need to ask Alice who was the other party on that *TxID,* because the service provider has identified it in the off-chain monitoring. Additionally, the off-chain monitoring provides a complete record to allows the tax authority to instantly match every transaction between two entities and identify a mismatch.

### CONCLUSION

Other variants or use cases of the disclosed techniques may become apparent to the person skilled in the art once given the disclosure herein. The scope of the disclosure is not limited by the described embodiments but only by the accompanying claims.

For instance, some embodiments above have been described in terms of a bitcoin network 106, bitcoin blockchain 150 and bitcoin nodes 104. However it will be appreciated that the bitcoin blockchain is one particular example of a blockchain 150 and the above description may apply generally to any blockchain. That is, the present invention is in by no way limited to the bitcoin blockchain. More generally, any reference above to bitcoin network 106, bitcoin blockchain 150 and bitcoin nodes 104 may be replaced with reference to a blockchain network 106, blockchain 150 and blockchain node 104 respectively. The blockchain, blockchain network and/or blockchain nodes may share some or all of the described properties of the bitcoin blockchain 150, bitcoin network 106 and bitcoin nodes 104 as described above.

In preferred embodiments of the invention, the blockchain network 106 is the bitcoin network and bitcoin nodes 104 perform at least all of the described functions of creating, publishing, propagating and storing blocks 151 of the blockchain 150. It is not excluded that there may be other network entities (or network elements) that only perform one or some but not all of these functions. That is, a network entity may perform the function of propagating and/or storing blocks without creating and publishing blocks (recall that these entities are not considered nodes of the preferred bitcoin network 106).

In other embodiments of the invention, the blockchain network 106 may not be the bitcoin network. In these embodiments, it is not excluded that a node may perform at least one or some but not all of the functions of creating, publishing, propagating and storing blocks 151 of the blockchain 150. For instance, on those other blockchain networks a "node" may be used to refer to a network entity that is configured to create and publish blocks 151 but not store and/or propagate those blocks 151 to other nodes.

Even more generally, any reference to the term "bitcoin node" 104 above may be replaced with the term "network entity" or "network element", wherein such an entity/element is configured to perform some or all of the roles of creating, publishing, propagating and storing blocks. The functions of such a network entity/element may be implemented in hardware in the same way described above with reference to a blockchain node 104.

It will be appreciated that the above embodiments have been described by way of example only. More generally there may be provided a method, apparatus or program in accordance with any one or more of the following Claims.

## Claims

1. A computer implemented method of determining whether a first party (103a) and a second party (103b) agree on membership of a set of blockchain transactions (152) transacting between the first and second party, the method comprising, by a third party (303):
from the first party, receiving a first report (420) comprising an indication of each of a plurality of blockchain transactions involving the first party including at least the blockchain transactions in said set, the first report comprising one or more reporting messages sent at one or more times;
from the second party, receiving a second report (430) comprising an indication of each of a plurality of blockchain transactions involving the second party including at least some or all of the blockchain transactions in said set, the second report comprising one or more reporting messages sent at one or more times;
observing on a blockchain (150) a first attestation recorded by the first party in at least one first blockchain transaction, the first attestation comprising a first attestation value derived from the first party having applied a first transform to the indications reported in the first report;
observing on a blockchain a second attestation recorded by the second party in a second blockchain transaction, the second attestation comprising a second attestation value derived from the second party having applied a second transform to the indications as reported in the second report, and the first and second blockchain transactions being separate form said set;
checking that the first report is consistent with the first attestation by applying the first transform to the indications reported in the first report and comparing with the first attestation from the blockchain;
checking that the second report is consistent with the second attestation, by applying the second transform to the indications reported in the second report and comparing with the second attestation from the blockchain; and
determining whether the indications in the first report indicate the same membership of the set as the indications in the second report.

2. The method of claim 1, wherein each of the first and second attestation values comprises a hash value, each of the first and second transforms comprising at least one hash function.

3. The method of claim 2, wherein one or both of:
the first attestation value comprises a root of a first hash tree, each of the indications reported in the first report being a leaf of the first hash tree, and/or
the second attestation value comprises a root of a second hash tree, each of the indications reported in the second report being a leaf of the second hash tree.

4. The method of any preceding claim, wherein the indications in the first and second reports (420, 430) comprise transaction IDs of the transactions reported in the first and second reports respectively.

5. The method of any preceding claim, wherein each of the first and second transactions is addressed to a public key of the third party (303).

6. The method of claim 5, wherein each of the first and second transactions comprises an output (203) comprising a locking script, the locking script being addressed to the third party (303) by including an address based on a public key of the third party and requiring a corresponding signature of the third party to unlock.

7. The method of any preceding claim, wherein the transactions between the first and second parties (103a, 103b) comprises at least some transactions transacting from the first party to the second party, each comprising an address based on a respective child public key of the second party, wherein each child key is related to a master public key of the second party by a derivation function, the derivation function being parameterized by respective derivation information.

8. The method of claim 7, wherein the respective derivation information for each child key comprises a respective invoice, sales order or receipt for the respective transaction.

9. The method of claim 7 or 8, wherein the derivation information comprises a chain code common to the public child keys.

10. The method of claim 7, 8 or 9, wherein the derivation information for each child key comprises a respective index value.

11. The method of any of claims 7 to 10, wherein the master public key of the second party is linked to a public identify of the second party (103b) by a digital certificate authority.

12. The method of any of claims 7 to 11, further comprising:
from the first party (103a), receiving the respective derivation information for at least one of the blockchain transactions in said set; and
in response to determining that the first and second reports (420, 430) indicate different membership of the set, using the derivation function, the master public key of the second party (103b) and the received derivation information in order to determine the child public key of the second party and thereby verify that the respective address is linked to the master public key of the second party.

13. The method of claim 12, wherein the receiving of the respective derivation information is also performed in response to determining that the first and second reports indicate different membership of a set.

14. Computer equipment (302) comprising:
memory comprising one or more memory units; and
processing apparatus comprising one or more processing units, wherein the memory stores code arranged to run on the processing apparatus, the code being configured so as when on the processing apparatus to perform the method of any preceding claim.

15. A computer program embodied on computer-readable storage and configured so as, when run on one or more processors, to perform a method of a first party (103a) to attest to a set of blockchain transactions (152) conducted between the first party and a second party (103b), the method comprising:
for each of respective one of the set of blockchain transactions, performing a protocol with the second party via an off-chain side channel (107) in order to form the respective blockchain transaction, wherein the respective blockchain transaction, once formed, comprises an address based on a respective child public key of the second party, the child pubic key being related to a master public key of the second party by a derivation function, and the derivation function being parameterized by respective derivation information, and wherein the protocol comprises receiving the derivation information and child public key from the second party; and
in response to a request from a third party (303), reporting the respective derivation information to the third party, thereby enabling the third party to demonstrate a link between the master public key and the address of the second party;
wherein each of the set of blockchain transactions, once formed, is recorded on a blockchain (150); and
the method further comprises sending to be recorded on a blockchain at least one separate blockchain transaction comprising an attestation of said set of blockchain transactions, the attestation comprising a transform of the indications of the set, said indications indicating the transactions in the set.

## Patentansprüche

1. Computerimplementiertes Verfahren zur Bestimmung, ob eine erste Partei (103a) und eine zweite Partei (103b) eine Zugehörigkeit zu einem Satz von Blockchain-Transaktionen (152) vereinbaren, die zwischen der ersten und der zweiten Partei durchgeführt werden, wobei das Verfahren durch eine dritte Partei (303) Folgendes umfasst:
Empfangen eines ersten Berichts (420) von der ersten Partei, der eine Angabe jeder einer Vielzahl von Blockchain-Transaktionen umfasst, an denen die erste Partei beteiligt ist und die mindestens die Blockchain-Transaktionen in dem Satz aufweisen, wobei der erste Bericht eine oder mehrere Meldungsnachrichten umfasst, die zu einem oder mehreren Zeitpunkten gesendet werden;
Empfangen eines zweiten Berichts (430) von der zweiten Partei, der eine Angabe jeder einer Vielzahl von Blockchain-Transaktionen umfasst, an denen die zweite Partei beteiligt ist und die mindestens einige oder alle der Blockchain-Transaktionen in dem Satz aufweisen, wobei der zweite Bericht eine oder mehrere Meldungsnachrichten umfasst, die zu einem oder mehreren Zeitpunkten gesendet werden;
Beobachten einer ersten Bestätigung, die von der ersten Partei in mindestens einer ersten Blockchain-Transaktion aufgezeichnet wird, auf einer Blockchain (150), wobei die erste Bestätigung einen ersten Bestätigungswert umfasst, der sich davon herleitet, dass die erste Partei eine erste Transformation auf die in dem ersten Bericht gemeldeten Angaben angewendet hat;
Beobachten einer zweiten Bestätigung, die von der zweiten Partei in einer zweiten Blockchain-Transaktion aufgezeichnet wird, auf einer Blockchain, wobei die zweite Bestätigung einen zweiten Bestätigungswert umfasst, der sich davon herleitet, dass die zweite Partei eine zweite Transformation auf die in dem zweiten Bericht gemeldeten Angaben angewendet hat, und wobei die erste und die zweite Blockchain-Transaktion getrennt von dem Satz sind;
Überprüfen, ob der erste Bericht mit der ersten Bestätigung übereinstimmt, durch Anwenden der ersten Transformation auf die in dem ersten Bericht gemeldeten Angaben und Vergleichen mit der ersten Bestätigung aus der Blockchain;
Überprüfen, ob der zweite Bericht mit der zweiten Bestätigung übereinstimmt, durch Anwenden der zweiten Transformation auf die in dem zweiten Bericht gemeldeten Angaben und Vergleichen mit der zweiten Bestätigung aus der Blockchain; und
Bestimmen, ob die Angaben im ersten Bericht die gleiche Zugehörigkeit zu dem Satz angeben wie die Angaben im zweiten Bericht.

2. Verfahren nach Anspruch 1, wobei jeder des ersten und des zweiten Bestätigungswerts einen Hash-Wert umfasst, wobei jede der ersten und der zweiten Transformation mindestens eine Hash-Funktion umfasst.

3. Verfahren nach Anspruch 2, wobei eines oder beides von Folgendem gilt:
der erste Bestätigungswert umfasst eine Wurzel eines ersten Hash-Baums, wobei jede der in dem ersten Bericht gemeldeten Angaben ein Blatt des ersten Hash-Baums ist,
und/oder
der zweite Bestätigungswert eine Wurzel eines zweiten Hash-Baums umfasst, wobei jede der in dem zweiten Bericht gemeldeten Angaben ein Blatt des zweiten Hash-Baums ist.

4. Verfahren nach einem der vorhergehenden Ansprüche, wobei die Angaben in dem ersten und dem zweiten Bericht (420, 430) Transaktions-IDs der Transaktionen umfassen, die in dem ersten bzw. dem zweiten Bericht gemeldet werden.

5. Verfahren nach einem der vorhergehenden Ansprüche, wobei jede der ersten und der zweiten Transaktion an einen öffentlichen Schlüssel der dritten Partei (303) adressiert ist.

6. Verfahren nach Anspruch 5, wobei jede der ersten und der zweiten Transaktion eine Ausgabe (203) umfasst, die ein Sperrskript umfasst, wobei das Sperrskript an die dritte Partei (303) adressiert wird, indem es eine Adresse aufweist, die auf einem öffentlichen Schlüssel der dritten Partei basiert, und eine entsprechende Signatur der dritten Partei zum Entsperren erfordert.

7. Verfahren nach einem der vorhergehenden Ansprüche, wobei die Transaktionen zwischen der ersten und der zweiten Partei (103a, 103b) mindestens einige Transaktionen umfassen, die von der ersten Partei an die zweite Partei durchgeführt werden und jeweils eine Adresse umfassen, die auf einem untergeordneten öffentlichen Schlüssel der zweiten Partei basiert, wobei jeder untergeordnete Schlüssel durch eine Ableitungsfunktion mit einem öffentlichen Hauptschlüssel der zweiten Partei in Beziehung steht, wobei die Ableitungsfunktion durch jeweilige Ableitungsinformationen parametriert wird.

8. Verfahren nach Anspruch 7, wobei die jeweiligen Ableitungsinformationen für jeden untergeordneten Schlüssel eine jeweilige Rechnung, einen jeweiligen Verkaufsauftrag oder eine jeweilige Quittung für die jeweilige Transaktion umfassen.

9. Verfahren nach Anspruch 7 oder 8, wobei die Ableitungsinformationen einen Kettencode umfassen, der den untergeordneten öffentlichen Schlüsseln gemeinsam ist.

10. Verfahren nach Anspruch 7, 8 oder 9, wobei die Ableitungsinformationen für jeden untergeordneten Schlüssel einen jeweiligen Indexwert umfassen.

11. Verfahren nach einem der Ansprüche 7 bis 10, wobei der öffentliche Hauptschlüssel der zweiten Partei durch eine digitale Zertifizierungsstelle mit einer öffentlichen Kennung der zweiten Partei (103b) verknüpft ist.

12. Verfahren nach einem der Ansprüche 7 bis 11, ferner umfassend:
Empfangen der jeweiligen Ableitungsinformationen für mindestens eine der Blockchain-Transaktionen in dem Satz von der ersten Partei (103a); und
in Reaktion auf das Bestimmen, dass der erste und der zweite Bericht (420, 430) eine unterschiedliche Zugehörigkeit zu dem Satz angeben, Verwenden der Ableitungsfunktion, des öffentlichen Hauptschlüssels der zweiten Partei (103b) und der empfangenen Ableitungsinformationen, um den untergeordneten öffentlichen Schlüssel der zweiten Partei zu bestimmen und dadurch zu verifizieren, dass die jeweilige Adresse mit dem öffentlichen Hauptschlüssel der zweiten Partei verknüpft ist.

13. Verfahren nach Anspruch 12, wobei das Empfangen der jeweiligen Ableitungsinformationen auch in Reaktion auf das Bestimmen durchgeführt wird, dass der erste und der zweite Bericht eine unterschiedliche Zugehörigkeit zu einem Satz angeben.

14. Computereinrichtung (302), umfassend:
einen Speicher, der eine oder mehrere Speichereinheiten umfasst; und
eine Verarbeitungsvorrichtung, die eine oder mehrere Verarbeitungseinheiten umfasst, wobei der Speicher Code speichert, der dazu ausgelegt ist, auf der Verarbeitungsvorrichtung ausgeführt zu werden, wobei der Code so konfiguriert ist, dass er, wenn auf der Verarbeitungsvorrichtung, das Verfahren nach einem der vorhergehenden Ansprüche durchführt.

15. Computerprogramm, das in einem computerlesbaren Speicher enthalten und so konfiguriert ist, dass es, wenn es auf einem oder mehreren Prozessoren ausgeführt wird, ein Verfahren einer ersten Partei (103a) durchführt, um einen Satz von Blockchain-Transaktionen (152) zu bestätigen, die zwischen der ersten Partei und einer zweiten Partei (103b) durchgeführt werden, wobei das Verfahren Folgendes umfasst:
für jede einer jeweiligen des Satzes von Blockchain-Transaktionen Durchführen eines Protokolls mit der zweiten Partei über einen Off-Chain-Seitenkanal (107), um die jeweilige Blockchain-Transaktion zu bilden, wobei die jeweilige Blockchain-Transaktion, sobald gebildet, eine Adresse umfasst, die auf einem jeweiligen untergeordneten öffentlichen Schlüssel der zweiten Partei basiert, wobei der untergeordnete öffentliche Schlüssel durch eine Ableitungsfunktion mit einem öffentlichen Hauptschlüssel der zweiten Partei in Beziehung steht, und wobei die Ableitungsfunktion durch jeweilige Ableitungsinformationen parametriert wird, und wobei das Protokoll Empfangen der Ableitungsinformationen und des untergeordneten öffentlichen Schlüssels von der zweiten Partei umfasst; und
in Reaktion auf eine Anforderung von einer dritten Partei (303) Melden der entsprechenden Ableitungsinformationen an die dritte Partei, wodurch der dritten Partei ermöglicht wird, eine Verknüpfung zwischen dem öffentlichen Hauptschlüssel und der Adresse des zweiten Teilnehmers nachzuweisen;
wobei jeder des Satzes von Blockchain-Transaktionen, sobald gebildet, auf einer Blockchain (150) aufgezeichnet wird; und
das Verfahren ferner Senden, um auf einer Blockchain aufgezeichnet zu werden, mindestens einer separaten Blockchain-Transaktion umfasst, die eine Bestätigung des Satzes von Blockchain-Transaktionen umfasst, wobei die Bestätigung eine Transformation der Angaben des Satzes umfasst, wobei die Angaben die Transaktionen in dem Satz angeben.

## Revendications

1. Procédé mis en œuvre par ordinateur pour déterminer si une première partie (103a) et une deuxième partie (103b) s'entendent sur l'appartenance de transactions blockchain (152) à un ensemble entre la première partie et la deuxième partie, le procédé comprenant les étapes suivantes exécutées par une tierce partie (303) :
recevoir, de la première partie, un premier rapport (420) comprenant une indication de chacune d'une pluralité de transactions blockchain impliquant la première partie comprenant au moins les transactions blockchain dans ledit ensemble, le premier rapport comprenant un ou plusieurs messages de rapport envoyés une ou plusieurs fois ;
recevoir, de la deuxième partie, un deuxième rapport (430) comprenant une indication de chacune d'une pluralité de transactions blockchain impliquant la deuxième partie comprenant au moins certaines ou toutes les transactions blockchain dudit ensemble, le deuxième rapport comprenant un ou plusieurs messages de rapport envoyés une ou plusieurs fois ;
observer, sur une blockchain (150), une première attestation enregistrée par la première partie dans au moins une première transaction blockchain, la première attestation comprenant une première valeur d'attestation dérivée de la première partie ayant appliqué une première transformée aux indications rapportées dans le premier rapport ;
observer, sur une blockchain, une deuxième attestation enregistrée par la deuxième partie dans une deuxième transaction blockchain, la deuxième attestation comprenant une deuxième valeur d'attestation dérivée de la deuxième partie ayant appliqué une deuxième transformée aux indications telles que rapportées dans le deuxième rapport, et les première et deuxième transactions blockchain étant séparées dudit ensemble ;
vérifier que le premier rapport est conforme à la première attestation en appliquant la première transformée aux indications signalées dans le premier rapport et en comparant avec la première attestation de la blockchain ;
vérifier que le deuxième rapport est conforme à la deuxième attestation, en appliquant la deuxième transformée aux indications signalées dans le deuxième rapport et en comparant avec la deuxième attestation de la blockchain ; et
déterminer si les indications figurant dans le premier rapport indiquent la même composition de l'ensemble que les indications figurant dans le deuxième rapport.

2. Procédé selon la revendication 1, dans lequel chacune des première et deuxième valeurs d'attestation comprend une valeur de hachage, chacune des première et deuxième transformées comprenant au moins une fonction de hachage.

3. Procédé selon la revendication 2, dans lequel une ou les deux parmi :
la première valeur d'attestation comprend une racine d'un premier arbre de hachage, chacune des indications rapportées dans le premier rapport étant une feuille du premier arbre de hachage, et/ou
la deuxième valeur d'attestation comprend une racine d'un deuxième arbre de hachage, chacune des indications rapportées dans le deuxième rapport étant une feuille du deuxième arbre de hachage.

4. Procédé selon l'une quelconque des revendications précédentes, dans lequel les indications dans les premier et deuxième rapports (420, 430) comprennent des ID de transaction des transactions rapportées dans les premier et deuxième rapports, respectivement.

5. Procédé selon l'une quelconque des revendications précédentes, dans lequel chacune des première et deuxième transactions est adressée à une clé publique de la troisième partie (303).

6. Procédé selon la revendication 5, dans lequel chacune des première et deuxième transactions comprend une sortie (203) comprenant un script de verrouillage, le script de verrouillage étant adressé à la troisième partie (303) en incluant une adresse basée sur une clé publique de la troisième partie et en exigeant une signature correspondante de la troisième partie pour déverrouiller.

7. Procédé selon l'une quelconque des revendications précédentes, dans lequel les transactions entre les première et deuxième parties (103a, 103b) comprennent au moins certaines transactions effectuant des transactions entre la première partie et la deuxième partie, chacune comprenant une adresse basée sur une clé publique enfant respective de la deuxième partie, où chaque clé enfant est liée à une clé publique principale de la deuxième partie par une fonction de dérivation, la fonction de dérivation étant paramétrée par des informations de dérivation respectives.

8. Procédé selon la revendication 7, dans lequel les informations de dérivation respectives pour chaque clé enfant comprennent une facture, un bon de commande ou un reçu respectifs pour la transaction respective.

9. Procédé selon la revendication 7 ou la revendication 8, dans lequel les informations de dérivation comprennent un code de chaîne commun aux clés enfants publiques.

10. Procédé selon les revendications 7, 8 ou 9, dans lequel les informations de dérivation pour chaque clé enfant comprennent une valeur d'index respective.

11. Procédé selon l'une quelconque des revendications 7 à 10, dans lequel la clé publique principale de la deuxième partie est liée à une identification publique de la deuxième partie (103b) par une autorité de certification numérique.

12. Procédé selon l'une quelconque des revendications 7 à 11, comprenant en outre les étapes suivantes :
en provenance de la première partie (103a), recevoir les informations de dérivation respectives pour au moins une des transactions blockchain dans ledit ensemble ; et
en réponse à la détermination que les premier et deuxième rapports (420, 430) indiquent une composition différente de l'ensemble, utiliser la fonction de dérivation, la clé publique principale de la deuxième partie (103b) et des informations de dérivation reçues afin de déterminer la clé publique enfant de la deuxième partie et vérifier ainsi que l'adresse respective est liée à la clé publique principale de la deuxième partie.

13. Procédé selon la revendication 12, dans lequel la réception des informations de dérivation respectives est également effectuée en réponse à la détermination que les premier et deuxième rapports indiquent une composition différente d'un ensemble.

14. Équipement informatique (302) comprenant :
une mémoire comprenant une ou plusieurs unités de mémoire ; et
un appareil de traitement comprenant une ou plusieurs unités de traitement, la mémoire stockant un code conçu pour être exécuté sur l'appareil de traitement, le code étant configuré de façon, lorsqu'il est sur l'appareil de traitement, à réaliser le procédé selon l'une quelconque des revendications précédentes.

15. Programme informatique mis en œuvre sur un stockage lisible par ordinateur et configuré, lorsqu'il est exécuté sur un ou plusieurs processeurs, pour exécuter un procédé d'une première partie (103a) pour attester d'un ensemble de transactions de chaîne de blocs (152) conduites entre la première partie et une deuxième partie (103b), le procédé comprenant les étapes suivantes :
pour chacune des transactions respectives de la blockchain, exécuter un protocole avec la deuxième partie par l'intermédiaire d'un canal latéral hors chaîne (107) afin de former la transaction blockchain respective, où la transaction blockchain respective, une fois formée, comprend une adresse basée sur une clé publique enfant respective de la deuxième partie, la clé pubienne enfant étant liée à une clé publique principale de la deuxième partie par une fonction de dérivation, et la fonction de dérivation étant paramétrée par des informations de dérivation respectives, et où le protocole comprend de recevoir les informations de dérivation et la clé publique enfant depuis la deuxième partie ; et
en réponse à une demande d'une troisième partie (303), communiquer les informations de dérivation respectives à la troisième partie, ce qui permet ainsi à la troisième partie de démontrer un lien entre la clé publique principale et l'adresse de la deuxième partie ;
où chacune de l'ensemble de transactions blockchain, une fois formée, est enregistrée sur une blockchain (150) ;
et
le procédé comprend en outre d'envoyer pour qu'elle soit enregistrée sur une blockchain au moins une transaction de blockchain séparée comprenant une attestation dudit ensemble de transactions blockchain, l'attestation comprenant une transformée des indications de l'ensemble, lesdites indications indiquant les transactions contenues dans l'ensemble.
